# EUROPEAN PATENT SPECIFICATION

(11) **EP 1 532 627 B1**
(45) Date of publication and mention of the grant of the patent: **19.03.2008**
(21) Application number: 03791211.0
(22) Date of filing: 13.08.2003
(51) Int. Cl.: G11B 19/20, G11B 19/247

(54) **OPTICAL DISC APPARATUS**
OPTISCHER PLATTENSPIELER
APPAREIL A DISQUE OPTIQUE

(30) Priority: 30.08.2002 JP 2002254335
(43) Date of publication of application: 25.05.2005
(60) Divisional application: 05025810.2
(73) Proprietor: MATSUSHITA ELECTRIC INDUSTRIAL CO., LTD, Kadoma-shi, Osaka 571-8501 (JP)
(72) Inventor: MARUYAMA, Tooru, Ibaraki-shi, Osaka 567-0868 (JP); KISHIMOTO, Takashi, Nara-shi, Nara 631-0072 (JP); FUJIUNE, Kenji Matsushita Elect. Ind. Co. Ltd, IPR, Shiromi 1-chome, Chuo-ku, Osaka 540-6319 (JP); WATANABE, Katsuya, Nara-shi, Nara 631-0033 (JP)
(74) Representative: Pautex Schneider, Nicole Véronique
(86) International application number: PCT/JP2003/010277
(87) International publication number: WO 2004/021344

(56) References cited:
- US-A- 5 254 920
- US-B1- 6 172 946
- PATENT ABSTRACTS OF JAPAN vol. 2000, no. 09, 13 October 2000 (2000-10-13) & JP 2000 173167 A (FUNAI ELECTRIC CO LTD), 23 June 2000 (2000-06-23)

## Description

### Technical Field

This present invention relates to an optical disc apparatus for reading out data from an optical disc such as a Compact Disc (CD) or a Digital Versatile Disc (DVD). An optical disc apparatus according to the preamble of claim 1 is known from the document US 6 172 946.

### Background Art

An optical disc apparatus for reading out data from an optical disc such as a CD and a DVD.

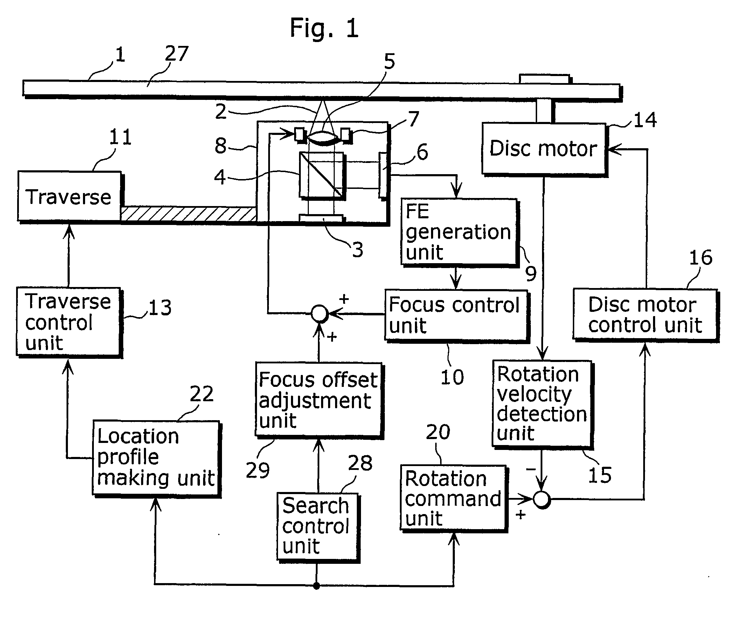

Fig. 1 is a structural diagram showing the structure of the above-mentioned conventional optical disc apparatus.

The conventional optical disc apparatus comprises an optical head 8, a traverse 11, a traverse control unit 13, a location profile making unit 22, an FE generation unit 9, a focus control unit 10, a focus offset adjustment unit 29, a search control unit 28, a rotation command unit 20, a disc motor control 14, a rotation speed detection unit 15, a disc motor control unit 16.

The optical head 8 is for irradiating converged optical beam 2 on an optical disc 1, and comprises an optical beam irradiation unit 3 that outputs the optical beam 2, a beam splitter 4 that allows the optical beam 2 to pass through and reflects the optical beam 2, a convergence lens 5 that converges the optical beam 2, a focus actuator 7 that moves the focus of the optical beam 2 converged after passing through the convergence lens 5 by driving convergence lens 5, and a photo detector 6 that outputs an optical detection signal corresponding to the detection result after detecting the optical beam 2.

The optical beam 2 outputted from an optical beam irradiation unit 3 passes through the beam splitter 4 and is converged on the optical disc 1 by the convergence lens 5. Also, optical beam 2 reflected by the optical disc 1 passes through the convergence lens 5 and is irradiated to the photo detector 6 by a beam splitter 4.

The traverse 11 changes the irradiation point (an optical beam spot), on the optical disc 1, of the optical beam 2 outputted from the optical head 8 by moving the optical head 8 to the radius direction of the optical disc 1. The disc motor 14 rotates the optical disc 1, generates a frequency signal showing the rotation frequency and outputs the frequency signal to the rotation velocity detection unit 15.

The rotation velocity detection unit 15 detects rotation velocity of the optical disc 1 based on the frequency signal of the disc motor 14 and outputs rotation velocity information showing the rotation velocity.

The search control unit 28 outputs search target radius location information showing the target radius location to the location profile making unit 22 and the rotation command unit 20 so as to perform a search operation for moving the optical beam spot to the targeted radius point (a target radius point) on the optical disc 1. Also, the search control unit 28 notifies the timings of the start and the end of the search of the focus offset adjustment unit 29.

The location profile making unit 22 makes a location profile showing the relation between the radius point of the optical beam spot and the moving time based on the search target radius location information obtained from the search control unit 28.

The traverse control unit 13 outputs a traverse drive signal for driving the traverse 11 so as to move the optical beam spot according to the location profile made by the location profile making unit 22.

The rotation command unit 20 conducts the target rotation velocity of the optical disc 1 based on the search target radius location information obtained from the search control unit 28 and outputs the target rotation velocity information showing the target rotation velocity to the disc motor control unit 16.

The disc motor control unit 16 outputs a motor drive signal for driving the disc motor 14 so as to be stable the rotation velocity of the optical disc 1 to the target rotation velocity based on the rotation velocity information from the rotation velocity detection unit 15 and the target rotation velocity information from the rotation instruction unit 20.

The FE generation unit 9 generates an FE signal showing the location gap in the normal direction on the optical disc information recording surface 27 between the focus of the optical beam 2 converged from the convergence lens 5 and the optical disc information recording surface 27 of the optical disc 1, and outputs the FE signal to the focus control unit 10.

The focus control unit 10 outputs a focus control signal for controlling feedback of the focus actuator 7 so as to rightly set the focus of the optical beam 2 on the optical disc information recording surface 27 based on the FE signal outputted from the FE generation unit 9.

The focus offset adjustment unit 29 applies an offset signal to the focus control signal outputted from the focus control unit 10 according to the timing notified by the search control unit 28 during the time from the start to the end of the search.

When reading out information from the optical disc 1 using this kind of optical disc apparatus, the traverse 11 and the disc motor 14 are controlled so as to maintain the linear velocity of the optical beam spot in the arbitrary radius location on the optical disc 1. Further, when the search operation of moving the optical beam spot to the target radius location on the optical disc 1 is performed, a location profile indicating the target radius location is made by the location profile making unit 22 first, the traverse 11 is driven so as to move the optical beam spot according to the made location profile, and the rotation velocity of the optical disc 1 is changed during the moving so as to satisfy the requirement for maintaining the linear velocity.

By the way, the phase change method is a representative example of recording methods on the optical disc 1. Information is recorded by increasing the irradiation power of the optical beam 2 in the optical beam irradiation unit 3, increasing the temperature on the optical disc information recording surface 27 up to a certain temperature and transforming the composition of the optical disc information recording surface 27 in this phase change method.

However, even in the condition where the optical beam 2 (reproduced beam) whose irradiation power is relatively weak is irradiated from the optical head 8 without recording the data to the optical disc 1, when the linear velocity of the optical beam spot that scans tracks on the optical disc 1 decreases to the permissible linear velocity or below at the time of moving the optical head 8, the temperature of the part where the optical beam 2 is irradiated, signal jitters on the optical disc 1 increases and in the worst case, the recorded data is lost. This phenomenon is called reproduced beam deterioration.

Therefore, the focus offset adjustment unit 29 in the conventional optical disc apparatus outputs an offset signal mentioned above so as to avoid this reproduced beam deterioration.

The focus actuator 7 drives the convergence lens 5 to the direction of the normal of the optical disc information recording surface 27 by the length according to the offset signal under the condition of the optical beam 2 being focused on the optical disc information recording surface 27 of the optical disc 1 so as to obtain a focus control signal on which an offset signal is applied from the focus control unit 10 when an offset signal is outputted in this way.

As the result, the surface of the optical beam spot on the optical disc information recording surface 27 becomes bigger compared with the surface of the optical beam spot on the optical disc information recording surface 27 under the condition where an offset signal is not outputted and the heat that is received by the optical disc 1 is dispersed. In this way, the temperature rising because of the deceleration of the linear velocity mentioned above decreases, and reproduced beam deterioration is avoided.

An offset signal is applied on the focus control signal from the focus control unit 10 so as to avoid reproduced beam deterioration in the conventional optical disc apparatus, however, there may occur a problem that it is impossible to fully avoid reproduced beam deterioration because the focus point of the optical beam 2 matches on the optical disc information recording surface 27.

Further, the above-mentioned conventional optical disc apparatus has another problem explained below.

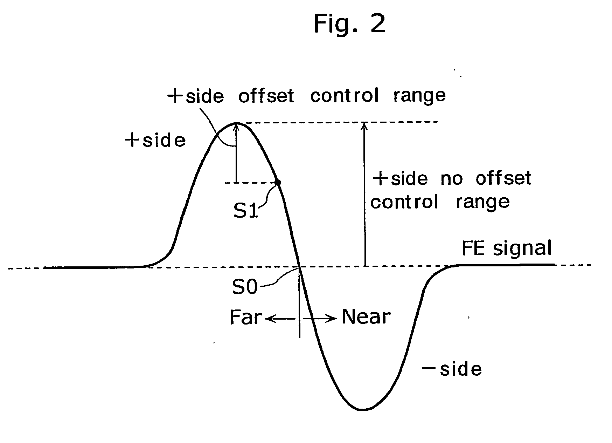

Fig. 2 is an illustration for explaining another problem of the conventional optical disc apparatus.

An FE signal outputted from the FE generation unit 9 is outputted in the plus side when the focus of the optical beam 2 is more distant than the optical disc information recording surface 27, while the signal is outputted in the minus side when the focus is nearer than the optical disc information recording surface 27.

In other words, the focus control unit 10 outputs a focus control signal so that the FE signal maintains the value shown at point S0 so as to put the focus of the optical beam 2 on the optical disc information recording surface 27. That is, the focus control unit 10 judges that the focus is more distant than the optical disc information recording surface 27 and outputs the focus control signal that makes the focus nearer to the optical disc information recording surface 27 when the FE signal is outputted in the plus side relative to point S0, while the focus control unit 10 judges that the focus is too close to the optical disc information recording surface 27 and outputs the focus control signal making the focus more distant from the optical disc information recording surface 27 when the FE signal is outputted in the minus side.

Here, an offset signal is outputted from the focus offset adjustment unit 29, focus location is controlled so that the FE signal maintains the value shown at point S1.

However, when the offset signal is outputted in this way, the control range in the plus side of the FE signal becomes narrower compared with the control range when the offset signal is not outputted, the focus location moves away by vibration of the traverse mechanism during the search and then the FE signal goes beyond the peak of the FE signal, and there is a problem that the focus location control comes off. Also, there is a problem that the focus location control is easy to come off because a channel traverse signal that generates when the optical beam spot traverses the track gets into the FE signal.

Further, when the control range including plus side and minus side of the FE signal is narrow, the offset amount can be applied is limited, optical beam spot cannot be fully enlarged even when the offset signal is applied, thus there occurs a problem that it is impossible to avoid reproduced beam deterioration.

Therefore, this present invention is achieved considering those problems mentioned above, which aims at providing an optical disc apparatus with improved prevention effect of reproduced beam deterioration.

Documents JP 2000 - 173167 and US 5,254,920 also describe a conventional optical disc apparatus.

### Disclosure of Invention

In order to achieve the above-mentioned purpose, the optical disc apparatus concerning this present invention is defined in the appended claims and is for reading out information recorded on an optical disc by irradiating an optical beam on the optical disc, comprises: a rotation unit operable to rotate the optical disc; a moving unit operable to move a spot where the optical beam is irradiated on the optical disc in a radius direction of the optical disc; a linear velocity detection unit operable to detect a linear velocity of the spot; a rotation control unit operable to control the rotation unit so that the linear velocity detected by the linear velocity detection unit remains substantially constant on an arbitrary radius location on the optical disc, when information recorded on the optical disc is read out; and a moving time control unit operable to control at least one of the rotation unit and the moving unit so as to prevent the linear velocity detected by the linear velocity detection unit from decreasing to a permissible linear velocity or below, when the moving unit moves the spot.

By doing this, the linear velocity of the spot is controlled so as to prevent the linear velocity from decreasing to the permissible linear velocity when the optical beam spot moves to the radius direction of the optical disc, it is possible to avoid occurrence of reproduced beam deterioration preventing the temperature from increasing in the spot on the optical disc. Also, it is possible to surely prevent the reproduced beam deterioration from occurring even if vibration generates by arranging the focus of the optical beam like the conventional example because it is not for preventing reproduced beam deterioration from occurring.

Also, when moving the spot along the radius direction of the optical disc, the moving time control unit may have the feature that it makes a location profile indicating a relation between a radius location and a moving time corresponding to the movement of the spot and controls the moving unit so that the spot is moved along the location profile, and the moving time control unit revises the location profile so as to prevent the linear velocity from decreasing and controls the moving unit so that the spot is moved along a revised location profile as the linear velocity detected by the linear velocity detection unit nears to the permissible linear velocity. For example, the rotation control unit makes the rotation unit increase rotation velocity of the optical disc when the moving unit moves the spot from an outer radius to an inner radius of the optical disc, and the moving time control unit revises the location profile so that a moving velocity of the spot is decreased by the moving unit when the linear velocity detected by the linear velocity detection unit nears to the permissible linear velocity during the movement.

In this way, when the location profile is altered, as the moving velocity of the spot by the moving unit decreases even if the increase rate of the rotation velocity of the optical disc by the rotation unit decreases, it is possible to prevent the occurrence of the reproduced beam deterioration without allowing the linear velocity of the spot to decrease to the permissible linear velocity or below.

Here, the optical disc apparatus further comprises: a type distinction unit operable to distinguish a type of the optical disc to be an irradiation target of the optical beam; and the moving time control unit may have the feature that it revises the permissible linear velocity according to the type of the optical disc determined by the type distinction unit.

In this way, the permissible linear velocity is changed according to the optical disc type, it is possible to surely avoid the occurrence of reproduced beam deterioration on plural kinds of optical discs.

Also, the moving time control unit can have the feature that it adjusts a rotation velocity of the optical disc by the rotation unit. For example, the rotation unit obtains a drive signal outputted by the rotation control unit and changes the rotation velocity of the optical disc according to the drive signal, and the moving time control unit amplifies the drive signal so as to prevent the linear velocity from decreasing when the linear velocity detected by the linear velocity detection unit nears to the permissible linear velocity.

In this way, amplifying the drive signal, for example, makes the decreasing decrease rate of the rotation velocity become smaller and the increasing increase rate of the rotation velocity become bigger, thus it is possible to prevent reproduced beam deterioration from occurring without allowing the linear velocity of the spot to decrease to the permissible linear velocity or below.

Further, this present invention can be realized as an irradiation method for irradiating optical beam on an optical disc, a program for having a computer executing the irradiation method and a recording medium for storing the program.

### Brief Description of Drawings

These and other objects, advantages and features of the invention will become apparent from the following description thereof taken in conjunction with the accompanying drawings that illustrate a specific embodiment of the invention. In the Drawings:
Fig. 1 is a structural diagram showing the structure of the conventional optical disc apparatus.
Fig. 2 is an illustration explaining the problem of the above-mentioned optical disc apparatus.
Fig. 3 is a structural diagram showing the structure of the optical disc apparatus in a first embodiment of this present invention.
Fig. 4 is a profile indication diagram showing an example of a location profile to be a basic when a search is performed from the inner radius to the outer radius of the optical disc.
Fig. 5 is a profile indication diagram showing an example of a location profile to be a basic when a search is performed from the outer radius to the inner radius of the optical disc.
Fig. 6 is an illustration explaining the relation between the velocity profile and the location profile.
Fig. 7 is a property diagram showing the adjusted location profile and the linear velocity of the optical beam spot based on the adjusted location profile when a search is performed from the inner radius to the outer radius of the optical disc.
Fig. 8 is a property diagram showing the adjusted location profile and the linear velocity of the optical beam spot based on the adjusted location profile when a search is performed from the outer radius to the inner radius of the optical disc.
Fig. 9 is a flow chart showing the operation of the optical disc apparatus.
Fig. 10 is an illustration explaining the relation between the traverse gain and the location profile or the velocity profile.
Fig. 11 is a structural diagram showing the structure of the optical disc apparatus concerning the variation example.
Fig. 12 is an illustration explaining the specifications of the CD, a DVD and a BD.
Fig. 13 is a waveform diagram showing the waveform of the FE signal outputted when the convergence lens is moved.
Fig. 14 is a property diagram showing the linear velocity of the optical beam spot based on the location profile when a search is performed from the outer radius to the inner radius of the optical disc.
Fig. 15 is an illustration explaining how the location profile is adjusted on the BD.
Fig. 16 is an illustration explaining how the location profile is adjusted on the CD as mentioned above.
Fig. 17 is a section view of the optical disc.
Fig. 18 is a structural diagram showing the structure of the optical disc apparatus in a second embodiment of the present invention.
Fig. 19 is a property diagram when a search is performed from the inner radius to the outer radius of the optical disc.
Fig. 20 is a property diagram when a search is performed from the outer radius to the inner radius of the optical disc.
Fig. 21 is a flow chart showing the operation of the optical disc apparatus.
Fig. 22 is a structural diagram showing the structure of the optical disc apparatus in a third embodiment of the present invention.
Fig. 23 is an illustration explaining how the surface of the optical beam spot is changed.
Fig. 24 is a flow chart showing the operation of the optical disc apparatus.

### Best Mode for Carrying Out the Invention

### (First Embodiment)

The optical disc apparatus in a first embodiment of the present embodiment will be explained below with reference to figures.

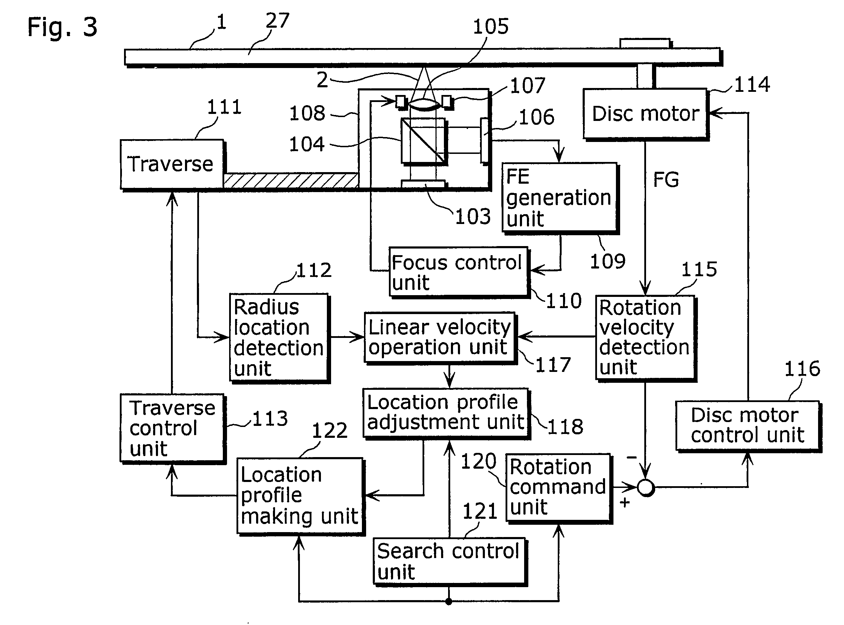

Fig. 3 is a structural diagram showing the structure of the optical disc apparatus in the first embodiment of the present invention.

This optical disc apparatus is improved in a prevention effect of reproduced beam deterioration by controlling the moving velocity of the radius direction of the optical beam spot on the optical disc, and comprises an optical head 108, a traverse 111, a traverse control unit 113, a location profile making unit 122, an FE generation unit 109, a focus control unit 110, a search control unit 121, a rotation command unit 120, a disc motor 114, a rotation speed detection unit 115, a disc motor control unit 116, a radius location detection unit 112, a linear velocity operation unit 117, a location profile adjustment unit 118. Also, this optical disc apparatus controls the traverse 111 and the disc motor 114 so as to maintain the linear velocity of the optical beam spot in the arbitrary radius location on the optical disc 1 when reading out information from the optical disc 1.

The optical head 108, like the conventional optical head 8, is for irradiating the converged optical beam 2 on the optical disc 1, and the optical head 108 comprises an optical beam irradiation unit 103 that outputs the optical beam 2, a beam splitter 104 that allows the optical beam 2 to pass through and reflects the optical beam 2, a convergence lens 105 that converges the optical beam 2, a focus actuator 107 moves the focus of the converged optical beam 2 that is converged after passing through the convergence lens 105 by driving the convergence lens 105, and a photo detector 106 that detects the optical beam 2 and outputs an optical detection signal corresponding to the detection result.

The optical beam 2 outputted from the optical beam irradiation unit 103 passes through the beam splitter 104 and is converged on the optical disc 1 by passing through the convergence lens 105. Also, the optical beam 2 reflected on the optical disc 1 passes the convergence lens 105 through and irradiated on the photo detector 106 by the beam splitter 104.

The FE generation unit 109 generates an FE signal showing the location gap in the direction of the normal of the optical disc information recording surface 27 between the focus of the optical beam 2 converged by the convergence lens 105 and the optical disc information recording surface 27 of the optical disc 1 based on the optical detection signal from the photo detector 106, and outputs the FE signal to the focus control unit 110.

The focus control unit 110 outputs the focus control signal for controlling the feedback of the focus actuator 107 so as to correctly put the focus of the optical beam 2 on the optical disc information recording surface 27 based on the FE signal outputted from the FE generation unit 109.

The traverse 111 changes the irradiation part (the location of the optical beam spot) of the optical beam 2 on the optical disc 1 outputted from the optical head 108 by moving the optical head 108 to the radius direction of the optical disc 1 based on the traverse drive signal from the traverse control unit 113. Also, the traverse 111 in the present embodiment outputs the moving signal showing the result when moving the optical beam spot to the arbitrary radius location relative to the location in the most inner radius of the optical disc 1.

The disc motor 114 rotates the optical disc 1 based on the motor drive signal from the disc motor control unit 116 and generates a frequency signal (an FG signal) showing the rotation frequency and outputs this to the rotation velocity detection unit 115.

The search control unit 121 outputs the search target radius location information to the targeted radius location (target radius location) on the optical disc 1 to the location profile making unit 122 and the rotation command unit 120 in order to perform a search operation for moving the optical beam spot.

Also, the search control unit 121 in the present embodiment outputs search radius direction information showing the direction (a search direction) for moving the optical beam spot to the target radius location along the radius direction to the location profile adjustment unit 118.

The rotation command unit 120 derives the target rotation velocity of the optical disc 1 that makes it possible to maintain the linear velocity of the optical beam spot based on the search target radius location information from the search control unit 121 and outputs the target rotation velocity information showing the target rotation velocity. In other words, the rotation command unit 120 derives the target rotation velocity that makes it possible to maintain the linear velocity in the arbitrary radius location on the optical disc 1 when data is read out from the optical disc 1 (when the optical beam spot is not moved to the radius direction). The maintained linear velocity is called a standard linear velocity from here.

The rotation velocity detection unit 115 detects the rotation velocity of the optical disc 1 based on the frequency signal of the disc motor 114 and outputs the rotation velocity information showing the rotation velocity.

The disc motor control unit 116 outputs a motor drive signal that drives the disc motor 114 so as to set the rotation velocity of the optical disc 1 at the target rotation velocity to the disc motor 114 based on the rotation velocity information from the rotation velocity detection unit 115 and the target rotation velocity information from the rotation command unit 20.

The radius location detection unit 112 obtains the moving signal outputted from the traverse 111, detects the radius location of the optical beam spot on the optical disc 1 and outputs the radius location information showing the radius location to the linear velocity operation unit 117.

The linear velocity operation unit 117 calculates the linear velocity of the optical beam spot on the optical disc 1 based on the radius location information from the radius location detection unit 112 and the rotation velocity information from the rotation velocity detection unit 115.

The location profile adjustment unit 118 outputs an adjustment instruction signal instructing the location profile making unit 122 to adjust the location profile in order not to allow the linear velocity to decrease to the value below the predetermined value (a permissible linear velocity) during search execution based on the search radius direction information from the search control unit 121 and the linear velocity information from the linear velocity operation unit 117.

The location profile making unit 122 makes a location profile of the optical beam spot based on the search target radius location information from the search control unit 121 and an adjustment instruction signal from the location profile adjustment unit 118.

In other words, the location profile making unit 122 makes a location profile to be a basic based on search target radius location information from the search control unit 121 and makes an adjustment on the location profile to be a basic based on the adjustment instruction signal from the location profile adjustment unit 118.

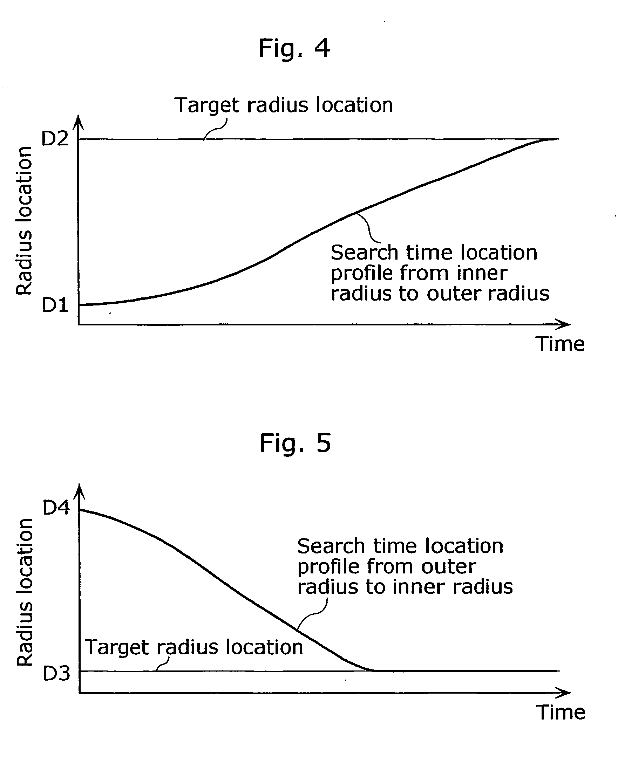

Fig. 4 is a profile indication diagram showing an example of the above-mentioned basic location profile when a search is performed from the inner radius to the outer radius of the optical disc.

When the location profile making unit 122 judges that the target radius location of the optical beam spot is D2 and there is a need to move the optical beam spot from the radius location D1 to the outer radius based on the search target radius location information from the search control unit 121, the location profile making unit 122 starts to move the optical beam spot from the radius location D1 at a certain acceleration, maintains the moving velocity in midstream, and makes a location profile that decreases the moving velocity at a certain rate of acceleration as the optical beam spot nears to the radius location D2.

Fig. 5 is a profile indication diagram showing an example of the above-mentioned basic location profile when a search is performed from the outer radius to the inner radius of the optical disc 1.

When the location profile making unit 122 judges that the target radius location of the optical beam spot is D3 and there is a need to moving the optical beam spot from the radius location D4 to the inner radius based on the search target radius location information from the search control unit 121, the location profile making unit 122 starts to move the optical beam spot from the radius location D4 at a certain acceleration, maintains the moving velocity in midstream, and makes a location profile that decreases the moving velocity at a certain rate of acceleration as the optical beam spot nears to the radius location D3.

To the location profile to be a basic made in this way, the location profile making unit 122 makes adjustment based on the adjustment instruction signal from the location profile adjustment unit 118 and makes a location profile in which the contents shown in the adjustment instruction signal are reflected.

Also, in detail, the location profile making unit 122 makes a location profile like the one mentioned above from the relation between the moving velocity to the radius direction of the optical beam spot and the moving distance (called a velocity profile from here).

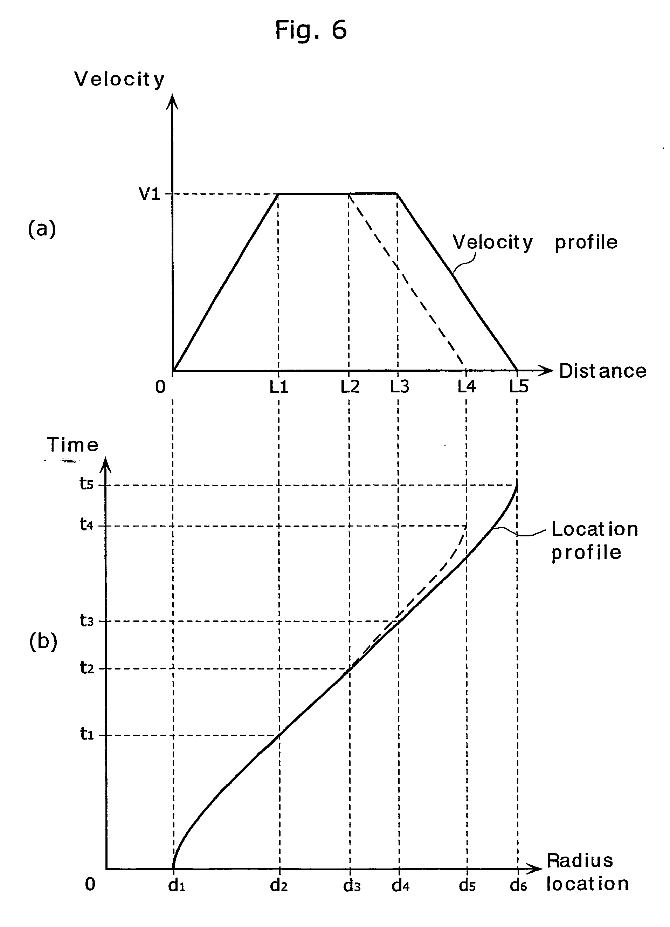

Fig. 6 is an illustration explaining the relation between the velocity profile and the location profile. Fig. 6, in the case of (a), shows the velocity profile and Fig. 6, in the case of (b), shows the location profile.

As shown in (a) of Fig. 6, the location profile making unit 122 makes the velocity profile that makes it possible to gradually increase the moving velocity from the start of moving the optical beam spot, maintain the moving velocity in midstream, and then gradually decrease the moving velocity. As a result, the location profile shown in (b) of Fig. 6 is made.

For example, when the location profile making unit 122 obtains the search target radius information from the search control unit 121 and judges that there is a need to move the optical beam spot by the distance L5 from the search target radius location information, as shown by the solid line in (a) of Fig. 6, the location profile making unit 122 makes the velocity profile that makes it possible to increase the moving velocity at a certain rate of acceleration in the moving segment from the moving starting point of the optical beam spot to distance L1, maintain the moving velocity (velocity V1) from distance L1 to distance L3, and decrease the moving velocity at a certain rate of deceleration in the moving segment from distance L3 to distance L5. As a result, as shown by the solid line in (b) of Fig. 6, the location profile that makes it possible to move the optical beam spot to the target radius location d6 corresponding to distance L5 from radius location d1 from time 0 of the moving starting time to time t5.

Also, when the location profile making unit 122 obtains search target radius location information from the search control unit 121 and judges that there is a need to move the optical beam spot by the distance L4 from the search target radius location information, as shown by the dotted line in (a) of Fig. 6, the location profile making unit 122 makes the velocity profile that makes it possible to increase the moving velocity at a certain rate of acceleration in the moving segment from the moving starting point of the optical beam spot to distance L1, maintain the moving velocity (velocity V1) from distance L1 to distance L2, and decrease the moving velocity at a certain rate of deceleration in the moving segment from distance L2 to distance L4. As a result, as shown by the dotted line in (b) of Fig. 6, the location profile that makes it possible to move the optical beam spot to the target radius location d5 corresponding to distance L4 from radius location d1 from time 0 of the moving starting time to time t4. As a result, as shown by the solid line in (b) of Fig. 6, the location profile that makes it possible to move the optical beam spot to the target radius location d1 corresponding to from radius location d1 to distance L4 from time 0 of the moving starting time to time t4.

After that, the traverse control unit 113 outputs the traverse drive signal that drives the traverse 111 so that the optical beam spot moves along the location profile made by the above-mentioned location profile making unit 122.

Here, the adjustment of the location profile in the present invention will be explained in detail.

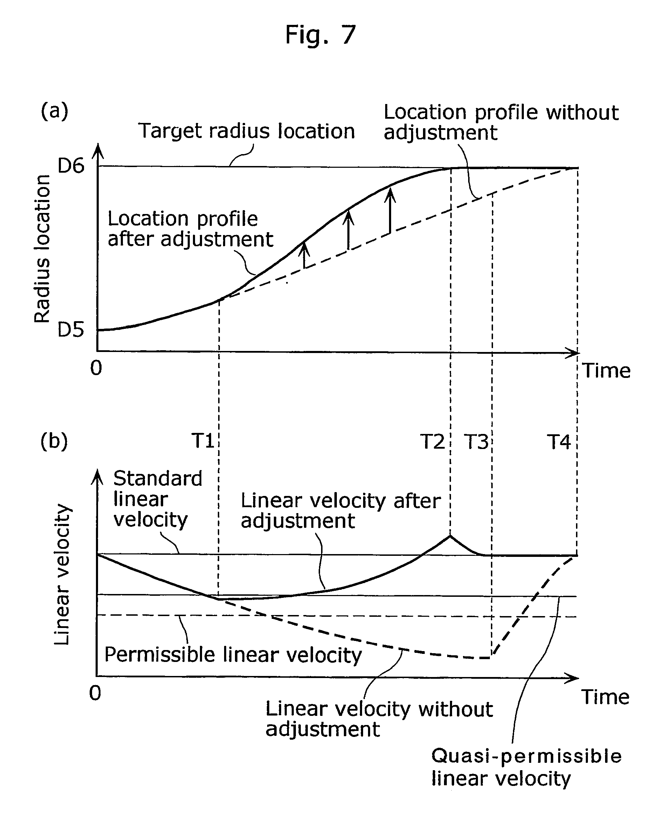

Fig. 7 is a property diagram showing the adjusted location profile and the linear velocity of the optical beam spot based on the adjusted location profile when a search is performed from the inner radius to the outer radius of the optical disc 1.

For example, when moving the optical beam spot from the radius location D5 in the outer radius direction to the target radius location D6, the search control unit 121, the rotation command unit 120, and the disc motor control unit 116 decreases the rotation velocity of the optical disc 1 which is rotated by the disc motor 114 from time 0 of the moving starting time (search starting time) to time T3, and sets the rotation velocity at the rotation velocity corresponding to the target radius location D6 after the time T3 passes.

In the case where the traverse control unit 113 and the traverse 111 moves the optical beam spot from the search starting time to time T4 according to the location profile to be a basic shown by the dotted line in (a) of Fig. 7 instead of moving the optical beam spot according to the adjusted location profile, the linear velocity of the optical beam spot on the optical disc 1 decreases to the permissible linear velocity or below as shown by the dotted line in (b) of Fig. 7. In other words, in this case, reproduced beam deterioration may occur like the conventional example.

However, in this embodiment, the location profile making unit 122 adjusts the location profile as shown by the solid line in (a) of Fig. 7 based on the adjusted command signal from the location profile adjustment unit 118 as to the linear velocity calculated by the linear velocity operation unit 117, and the optical beam spot is moved to the radius direction along the adjusted location profile, the above-mentioned linear velocity is maintained above the permissible linear velocity as shown by the solid line in (b) of Fig. 7, and thus it is possible to avoid reproduced beam deterioration.

In other words, the location profile adjustment unit 118 understands that the linear velocity nears to the permissible linear velocity when the linear velocity decreases to the quasi-permissible linear velocity or below. After that, the location profile adjustment unit 118 adjusts the location profile after time T1 that is the time when the linear velocity decreases to the quasi-permissible linear velocity or below, and instructs the location profile making unit 122 to increase the moving velocity in the radius direction of the optical beam spot. As a result, the linear velocity of the optical beam spot is maintained above the permissible linear velocity even when the rotation velocity of the optical disc 1 decreases, and thus it is possible to avoid reproduced beam deterioration.

The linear velocity increases between time T1 and time T2 because the moving velocity of the optical beam spot in the radius direction increases as shown in (b) of Fig. 7, the optical beam spot stops moving to the radius direction after passing through time T2, and the linear velocity decreases in response to the decrease in the rotation velocity of the optical disc 1 by the disc motor 114. And, the linear velocity is maintained at a standard linear velocity after the optical beam spot passes through time T3 when the rotation velocity of the optical disc 1 is maintained.

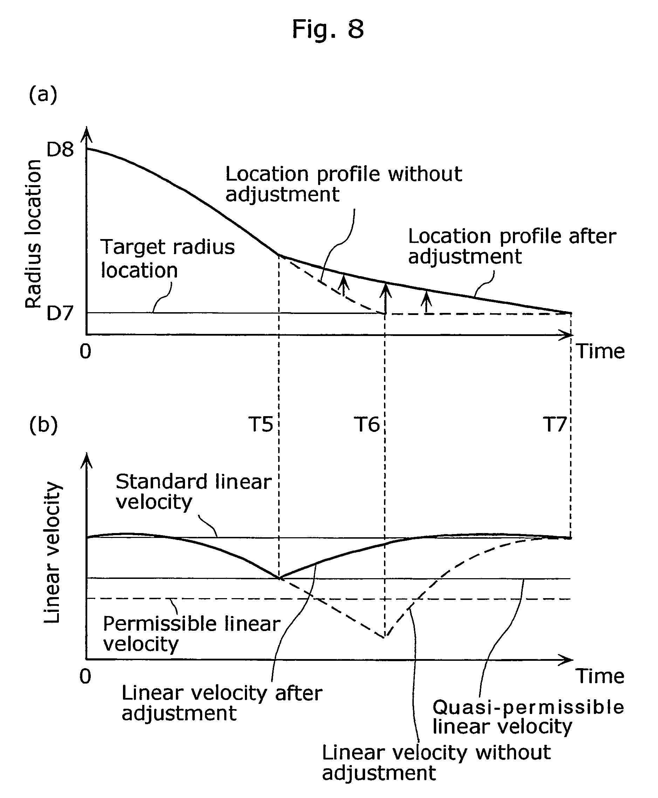

Fig. 8 is a property diagram showing the adjusted location profile and the linear velocity of the optical beam spot based on the adjusted location profile when a search is performed from the outer radius to the inner radius of the optical disc 1.

For example, when moving the optical beam spot from the radius location D8 to the target radius location D7 in the inner radius, the search control unit 121, the rotation command unit 120, and the disc motor control unit 116 increase the rotation velocity of the optical disc 1 which is rotated by the disc motor 14 between time 0 of the moving starting time (the search starting time) and time T7, and the rotation velocity is set at the target rotation velocity for the target radius location D7 when passing time T7.

In the case where the traverse control unit 113 and the traverse 111 moves the optical beam spot to time T6 in the radius direction along the location profile to be basic shown by the dotted line in (a) of Fig. 8 instead of moving the optical beam spot along the adjusted location profile, the disc motor 114 cannot increase the rotation velocity of the optical disc 1 to the rotation velocity for the target radius location D7 by Time 6, in other words it takes until time T7, and the linear velocity of the optical beam spot on the optical disc 1 decreases to the permissible linear velocity or below as shown by the dotted line in (b) of Fig. 8. In other words, in this case, reproduced beam deterioration may occur like the conventional example.

However, in this embodiment, based on an adjusted instruction signal concerning the linear velocity calculated by the linear velocity operation unit 117 from the location profile adjustment unit 118, it is possible to avoid reproduced beam deterioration because the location profile making unit 122 adjusts the location profile as shown by the solid line in (a) of Fig. 8, the optical beam spot is moved to the radius direction along the adjusted location profile, and the above-mentioned linear velocity is maintained above the permissible linear velocity as shown by the solid line in (b) of Fig. 8.

In other words, the location profile adjustment unit 118 understands that the linear velocity nears to the permissible linear velocity when the linear velocity decreases to the quasi-linear velocity or below. And the location profile adjustment unit 118 adjusts the location profile after time T5 when the linear velocity decreases to the quasi-permissible linear velocity or below, and instructs the location profile making unit 122 to decelerate the moving velocity of the optical beam spot in the radius direction. As a result, the linear velocity of the optical beam spot is maintained above the permissible linear velocity even when the rotation velocity of the optical disc 1 does not increase enough and reproduced beam deterioration can be avoided.

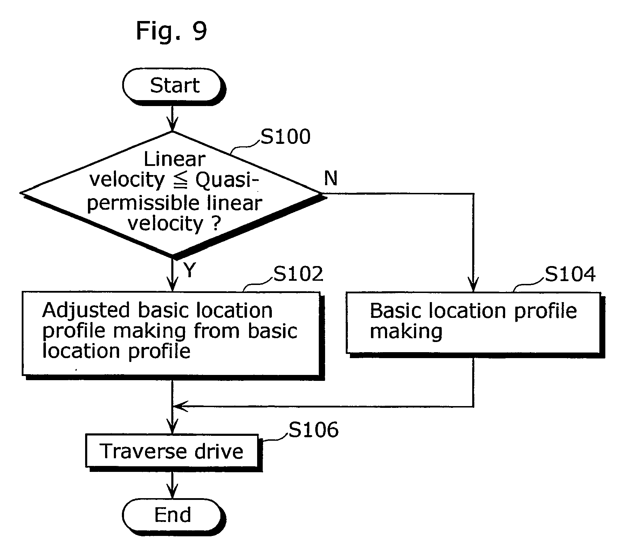

The characteristic operation of the optical disc apparatus in this embodiment will be explained with reference to Fig. 9.

Fig. 9 is a flow chart showing the operation of the optical disc apparatus in this embodiment. First, the optical disc apparatus judges whether the linear velocity is less than the quasi-permissible linear velocity (step S100). And, when the linear velocity is judged to be not more than the quasi-permissible linear velocity (step S100 Y), the optical disc apparatus makes a basic location profile and adjusts the location profile (step S102).

On the other hand, when the linear velocity is judged to be not less than the quasi-permissible linear velocity (step S100 N), the optical disc apparatus makes a basic location profile (step S104).

And, the optical disc apparatus moves the optical head 108 from the traverse 111, and moves the optical beam spot to the radius direction of the optical disc 1 according to the location profile made as mentioned above (step S106).

In this way, reproduced beam deterioration is avoided by adjusting the location profile instead of avoiding reproduced beam deterioration by adjusting the focus of the optical beam 2 like the conventional example in this embodiment, and thus it is possible to avoid the difficulty in controlling the focus location, completely avoid reproduced beam deterioration without being limited to the output range of the FE signal as well as avoiding reproduced beam deterioration even when some vibration is added to the traverse mechanism during search. Also, in this embodiment, it is possible to search without causing reproduced beam deterioration because the moving velocity of the optical beam spot in the search direction is adjusted when a search is performed from the outer radius to the inner radius even when the acceleration of the disc motor 114, for maintaining the linear velocity at the standard linear velocity, is slow.

In this embodiment, the location profile making unit 122 adjusts the location profile based on the instruction of the location profile adjustment unit 118, the traverse control unit 113 drives the traverse 111 so as to move the optical beam spot along the location profile, but the traverse control unit 113 can adjust the traverse gain without adjusting the location profile.

In other words, the traverse control unit 113 obtains the linear velocity calculated by the linear velocity operation unit 117 and performs processing, for example, increasing or decreasing a signal (an adjustment of the traverse gain) on the traverse drive signal outputted to the traverse 111 so as to prevent the linear velocity from decelerating to the permissible linear velocity or below. The traverse 111 changes the moving velocity (of the optical disc 1 to the inward or the outward in the radius direction) of the optical beam spot, that is, the optical head 108 in the search direction based on the traverse drive signal.

For example, the traverse control unit 113 adjusts the traverse gain low and decelerates the moving velocity to the search target radius location of the optical beam spot when a search is performed from the outer radius to the inner radius, or adjusts the traverse gain high and accelerates the moving velocity to the search target radius location of the optical beam spot when a search is performed from the inner radius to the outer radius.

Adjusting the traverse gain like this has the effect equal to the adjusting the location profile and the velocity profile.

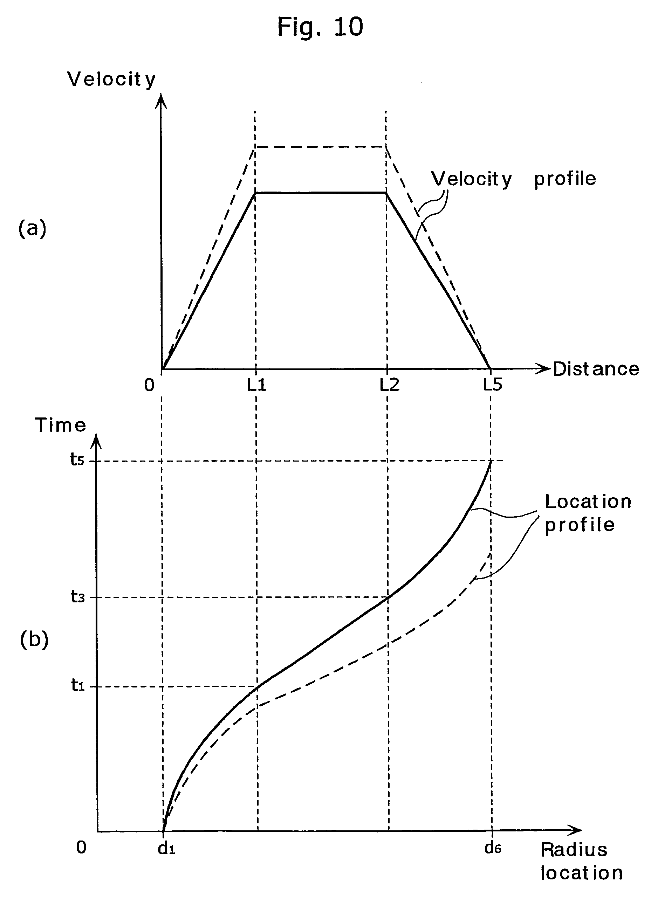

Fig. 10 is an illustration explaining the relation between the traverse gain and the location profile or the velocity profile, Fig. 10, in the case of (a), shows the velocity profile and Fig. 10, in the case of (b), shows the location profile.

For example, the change of the moving velocity generated by the processing of increasing the traverse gain is equal to the change of the moving velocity generated by the processing of adjusting the location profile from the solid line to the dotted line as shown in (b) of Fig. 10, that is, adjusting the velocity profile from the solid line to the dotted line as shown in (a) of Fig. 10.

Also, the traverse control unit 113 can apply an offset on the traverse drive signal. Applying an offset makes the value of a signal obtained as a traverse drive signal by the traverse 111 bigger or smaller, and thus the moving velocity of the optical beam spot to the search direction is adjusted. For example, applying a minus offset makes it possible to decelerate the moving velocity of the optical beam spot to the search target radius location when the search is performed from the outer radius to the inner radius, while applying a plus offset makes it possible to accelerate the moving velocity of the optical beam spot to the search target radius location when the search is performed from the inner radius to the outer radius. As a result, it is possible to maintain the linear velocity of the optical beam spot on the optical disc 1 above the permissible linear velocity.

### (Variation)

Next, a variation of the optical disc apparatus in the above-mentioned embodiment will be explained.

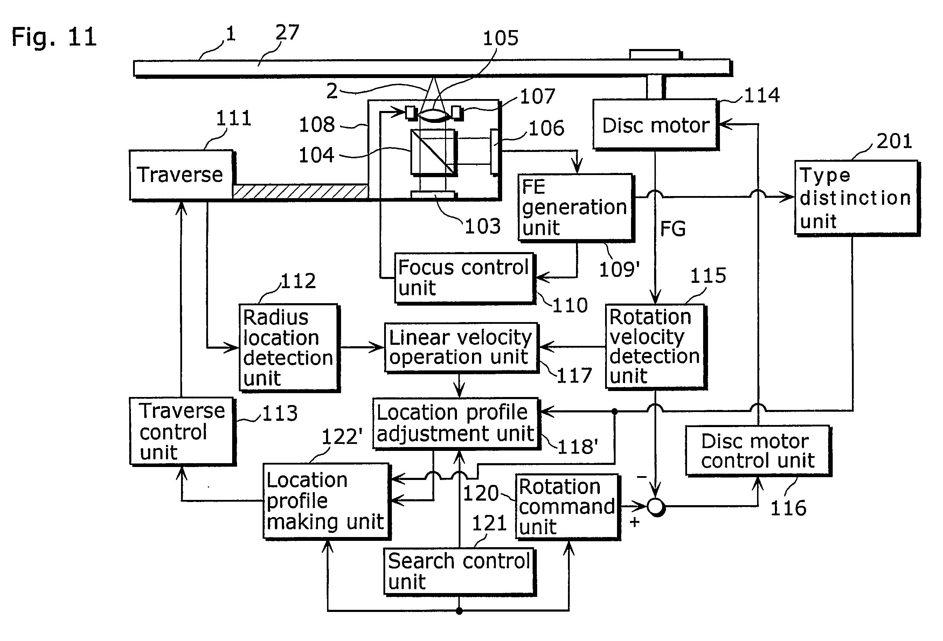

Fig. 11 is a structural diagram showing the structure of the optical disc apparatus concerning the variation.

The optical disc apparatus concerning this variation distinguishes the type of the optical disc 1 and changes the permissible linear velocity according to the type, adjusts the location profile, and has a type distinction unit 201 for distinguishing the type of the optical disc 1.

There are several types of the optical disc 1 such as a Compact Disc (CD), a Digital Versatile Disc (DVD) and a Blu-ray Disc (BD).

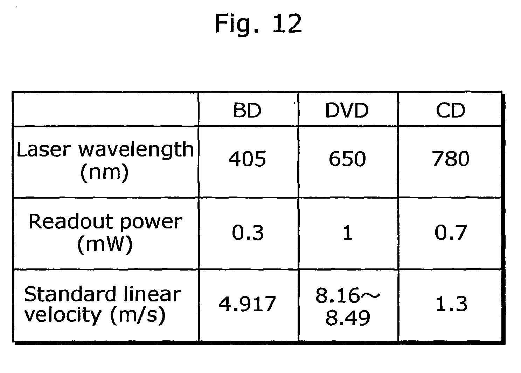

Fig. 12 is an illustration explaining the specifications of the above-mentioned CD, DVD, and BD.

As to a BD, the optimum wavelength (a laser wavelength) of the optical beam 2 to be irradiated is 405 nm, the output (read-out power) of the optical beam 2 necessary for reading out is 0.3 mW, and the standard linear velocity is 4.917 m/s.

As to a DVD, the laser wavelength is 650 nm, the read-out power is 1 mW, and the standard linear velocity is 8.16~8.49 m/s.

As to a CD, the laser wavelength is 780 nm, the read-out power is 0.7 mW, and the standard linear velocity is 1.3 m/s.

Here, the optical beam irradiation unit 103 in the variation changes the wavelength and the output of the optical beam 2 to be irradiated according to the type of the optical disc 1 mentioned above that is inserted into the optical disc apparatus.

The focus control unit 110 controls the focus actuator 107 and moves the convergence lens 105 under the circumstance where the optical beam 2 with a predetermined wavelength is irradiated from the optical beam irradiation unit 103. And the FE generation unit 109' outputs the FE signal corresponding to the moving result of the convergence lens 105.

The type distinction unit 201 obtains the FE signal outputted from the FE generation unit 109', and distinguishes the type of the optical disc 1 inserted into the optical disc apparatus based on the FE signal.

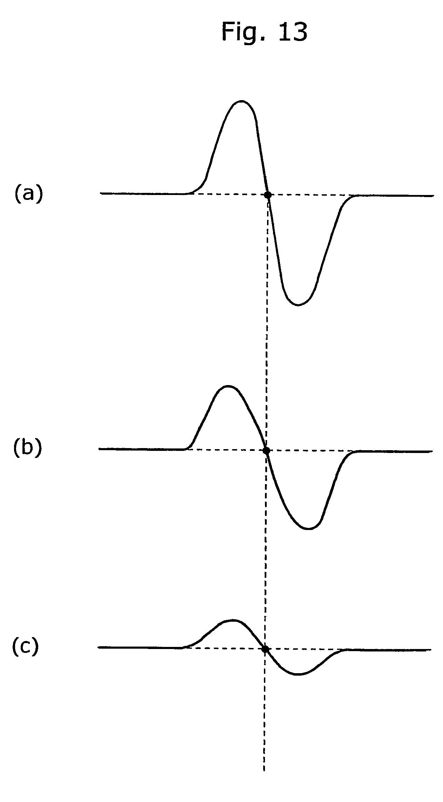

Fig. 13 is a waveform diagram showing the waveform of the FE signal outputted when moving the convergence lens 105.

As mentioned above, the optimum laser wavelengths for a BD, a DVD and a CD differ from each other. For example, when the optical beam 2 whose wavelength is 405 nm from the optical beam irradiation unit 103 is irradiated, the FE generation unit 109' outputs the FE signal with a big amplitude as shown in (a) of Fig. 13 when a BD is inserted into the optical disc apparatus, the FE generation unit 109' outputs the FE signal with an amplitude smaller than the above-mentioned amplitude as shown in (b) of Fig. 13 when a DVD is inserted into the optical disc apparatus, and the FE generation unit 109' outputs the FE signal with an increasingly smaller amplitude as shown in (c) of Fig. 13 when a CD is inserted into the optical disc apparatus.

Also, when the optical beam 2 whose wavelength is 780 nm is irradiated from the optical beam irradiation unit 103, the FE generation unit 109' outputs the FE signal with a small amplitude as shown in (c) of Fig. 13 when a BD is inserted into the optical disc apparatus, the FE generation unit 109' outputs the FE signal with an amplitude bigger than the above-mentioned amplitude as shown in (b) of Fig. 13 when a DVD is inserted into the optical disc apparatus, and the FE generation unit 109' outputs the FE signal with an increasingly bigger amplitude as shown in (a) of Fig. 13 when a CD is inserted into the optical disc apparatus.

The type distinction unit 201 distinguishes the type of the optical disc 1 inserted into the optical disc apparatus based on the amplitude differences of these respective FE signals, and outputs type information showing the distinction result to the location profile adjustment unit 118' and the location profile making unit 122'.

The location profile adjustment unit 118' determines the standard linear velocity and the permissible linear velocity corresponding to the optical disc 1 inserted into the optical disc apparatus based on the type information when obtaining the type information from the type distinction unit 201. And the location profile adjustment unit 118' instructs the location profile making unit 122' to prevent the linear velocity calculated by the linear velocity operation unit 117 from decreasing to the determined permissible linear velocity or below.

The location profile making unit 122' makes a basic location profile corresponding to the optical disc 1 inserted into the optical disc apparatus based on the type information when obtaining the type information from the type distinction unit 201. Also, the location profile making unit 122' adjusts the basic location profile based on the instruction from the location profile adjustment unit 118'.

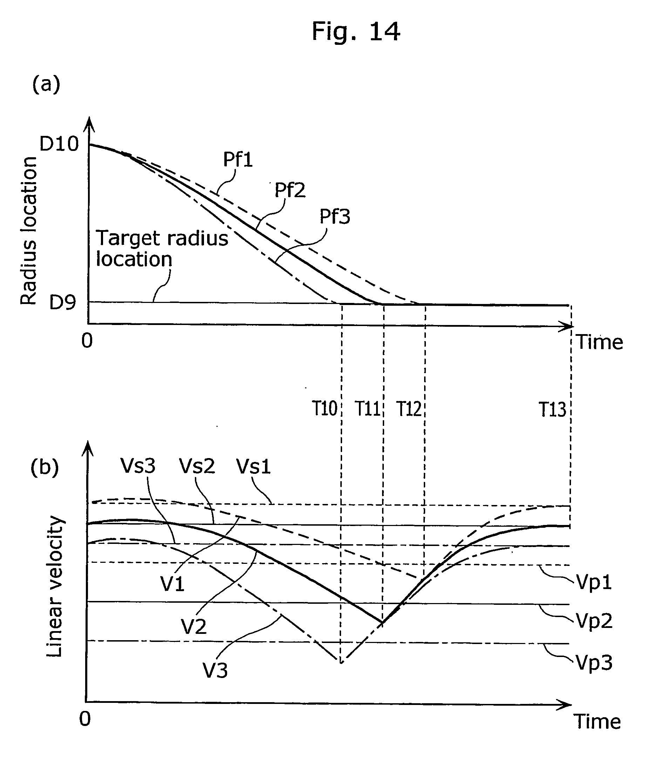

Fig. 14 is a property diagram showing the basic location profile and the linear velocity of the optical beam spot based on the location profile when a search of the optical disc 1 is performed from the outer radius to the inner radius.

As shown in (a) of Fig. 14, the location profile making unit 122' makes a location profile Pf1 as a basic location profile on obtaining the type information showing that the type of the optical disc 1 is a BD from the type distinction unit 201 when a search is performed from the radius location D10 toward the target radius location D9 in the inner radius direction, a location profile Pf2 whose inclination is sharper than that of the location profile Pf1 as a basic location profile, and a location profile Pf3 whose inclination is increasingly sharper than the location profile Pf2 as a basic location profile.

In other words, the location profile making unit 122' makes the location profile Pf1 making the optical beam spot reach to the target radius location D9 at time T12 when the type of the optical disc 1 is a BD, the location profile Pf 2 making the optical beam spot reach to the target radius location D9 at time T11 before passing through time T12 when the type of the optical disc 1 is a DVD, and the location profile Pf3 making the optical beam spot reach to the target radius location D9 at time T10 before passing through time T11 when the type of the optical disc is a CD.

Here, when the type of the optical disc 1 which is inserted into the optical disc apparatus is a BD and the optical beam spot is moved along the location profile Pf1, the linear velocity V1 calculated by the linear velocity operation unit 117 gradually decreases from the standard linear velocity Vs1 at the search starting time, the linear velocity becomes minimum when the optical beam spot reaches to the target radius location D9 at time T12, after that, the linear velocity V1 increases as the rotation velocity of the optical disc 1 increases and then decelerates to the standard linear velocity Vs1 at time T13.

And, the location profile adjustment unit 118' instructs the location profile making unit 122' to adjust the location profile Pf1 so as to prevent the linear velocity V1 from decreasing to the permissible linear velocity Vp1 suitable for a BD or below when obtaining the linear velocity showing the linear velocity V1 mentioned above and the type information showing that the type of the optical disc 1 is a BD.

Also, when the type of the optical disc 1 which is inserted into the optical disc apparatus is a DVD and the optical beam spot is moved along the location profile Pf2, the linear velocity V2 calculated by the linear velocity operation unit 117 gradually decreases from the standard linear velocity Vs2 at the search starting time, the linear velocity becomes minimum when the optical beam spot reaches to the target radius location D9 at time T11, after that, the linear velocity V2 increases as the rotation velocity of the optical disc 1 increases and then decelerates to the standard linear velocity Vs2 at time T13.

And, the location profile adjustment unit 118' instructs the location profile making unit 122' to adjust the location profile Pf2 so as to prevent the linear velocity V2 from decreasing to the permissible linear velocity Vp2 suitable for a DVD or below when obtaining the linear velocity information showing the linear velocity V2 mentioned above and the type information showing that the type of the optical disc 1 is a DVD.

Also, the linear velocity V3 calculated by the linear velocity operation unit 117 gradually decreases from the standard linear velocity Vs3 at the search starting time, becomes minimum when the optical beam spot reaches to the target radius location D9 at time T10, after that, the linear velocity V3 increases as the rotation velocity of the optical disc 1 increases and then decelerates to the standard linear velocity Vs3 at time T13 when the optical beam spot is moved along the location profile Pf3.

And, the location profile adjustment unit 118' instructs the location profile making unit 122' to adjust the location profile Pf3 so as to prevent the linear velocity V3 from decreasing to the permissible linear velocity Vp3 suitable for a CD or below when obtaining the linear velocity information showing the linear velocity V3 mentioned above and the type information showing that the type of the optical disc 1 is a CD.

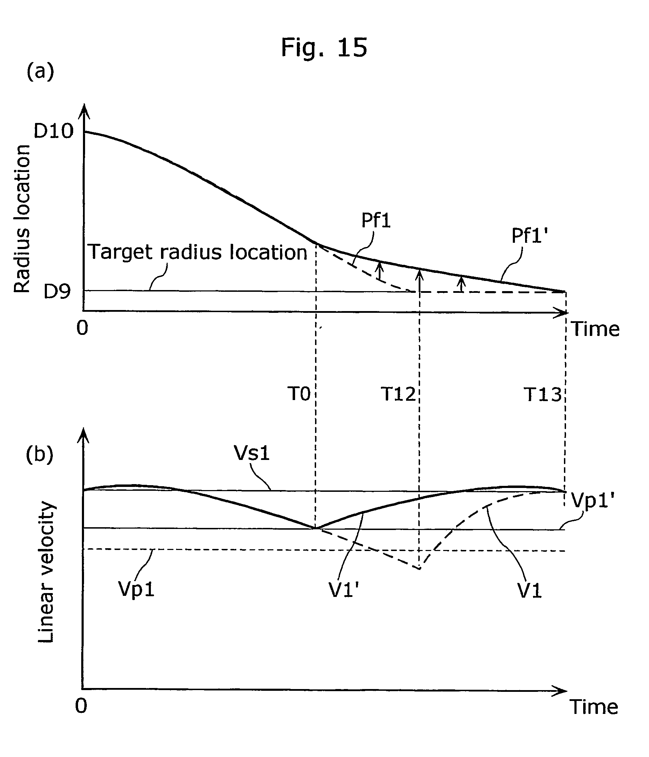

Fig. 15 is an illustration explaining how the location profile is adjusted for a BD as mentioned above.

As mentioned in (b) of Fig. 15, the location profile adjustment unit 118' understands that the linear velocity V1 nears to the permissible linear velocity Vp1, and instructs the linear velocity operation unit 117 to change the location profile Pf1 after time T0 to the location profile Pf1' so as to accelerate the moving velocity of the optical beam spot in the radius direction, in other words, as shown in (a) of Fig. 15, when the linear velocity V1 reaches to the quasi-permissible linear velocity Vp1' at time T0 based on the linear velocity information from the linear velocity operation unit 117. As a result, the location profile making unit 122' adjusts the location profile Pf1 to make the location profile Pf1'.

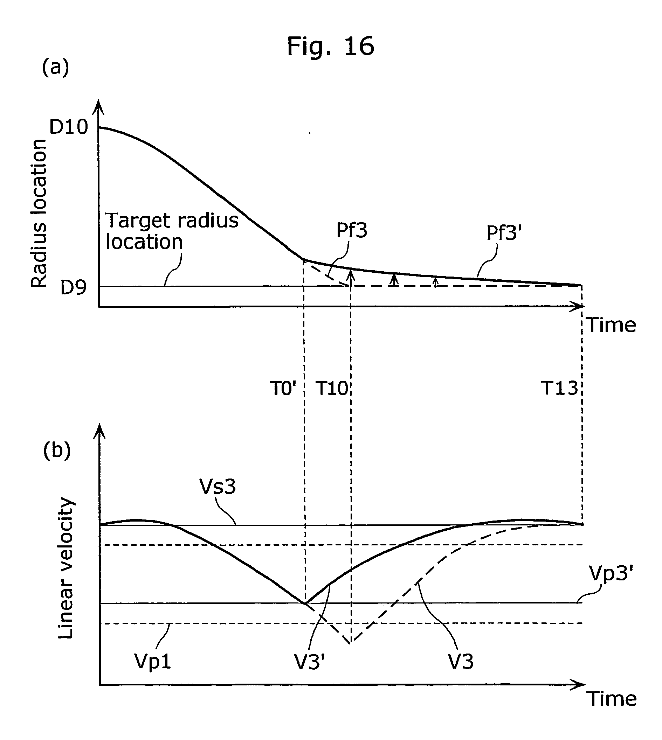

Fig. 16 is an illustration explaining how the location profile is adjusted for a CD as mentioned above.

As mentioned in (b) of Fig. 16, the location profile adjustment unit 118' understands that the linear velocity V3 nears to the permissible linear velocity Vp3, and instructs the linear velocity operation unit 117 to change the location profile Pf3 after time T0' to the location profile Pf3' so as to accelerate the moving velocity of the optical beam spot in the radius direction, in other words, as shown in (a) of Fig. 16, when the linear velocity V3 reaches to the quasi-permissible linear velocity Vp3' at time T0' based on the linear velocity information from the linear velocity operation unit 117. As a result, the location profile making unit 122' adjusts the location profile Pf3 to make the location profile Pf3'.

As mentioned above, the operation of the optical disc apparatus concerning the variation when a search is performed from the outer radius to the inner radius of the optical disc 1 has been explained, likewise, the optical disc apparatus concerning the variation makes a basic location profile suitable for the type of the optical disc and adjusts the location profile based on the permissible linear velocity and the quasi-permissible linear velocity according to the type when a search is performed from the inner radius to the outer radius of the optical disc.

The optical disc apparatus concerning this variation adjusts the location profile according to the type of the optical disc 1 which is inserted into the optical disc apparatus, and thus it is possible to completely prevent reproduced beam deterioration from occurring irrespective of the types of the optical discs.

Also, it is possible to determine the type of the optical disc 1 using another determination method except the one where the type of the optical disc 1 which is inserted into the optical disc apparatus is determined based on the FE signal in the variation.

For example, the type of the optical disc 1 can be judged according to the location of the optical disc information recording surface 27.

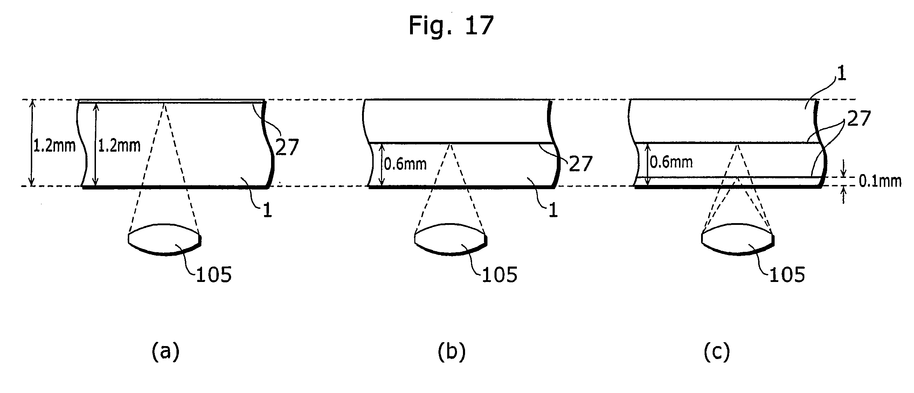

Fig. 17 is a section view of the optical disc 1 showing the location of the optical disc information recording surface 27.

As shown in (a) of Fig. 17, the optical disc information recording surface 27 in a CD is located in 1.2mm below the surface in the convergence lens 105 side of the optical disc 1. As shown in (b) of Fig. 17, the optical disc information recording surface 27 in a DVD is located in 0.6 mm below the surface in the convergence lens 105 side of the optical disc 1. Also, as shown in (c) of Fig. 17, the optical disc information recording surface 27 in a combination disc of a BD and a DVD is located in 0.1 mm and 0.6 mm in thickness from the surface in the convergence lens 105 side of the optical disc 1, the information is recorded on a different optical disc information recording surface 27 according to the contents (such as video data or text data).

In other words, the optical disc apparatus identifies the optical disc 1 which is inserted as any of a combination disc of a BD and a DVD, a DVD or a CD based on the focus distance when adjusting the focus of the optical beam 2 to the optical disc information recording surface 27.

Also, as shown in Fig. 12, it is possible to determine the type of the optical disc 1 based on the read-out power because respective types of the optical disc 1 have a distinctive read-out power.

For example, the optical disc apparatus switches the output of the optical beam 2 to 0.3 mW, 0.7 mW, and then 1 mW, and determines the type of the optical disc 1 which is inserted based on the signal output result. In other words, the optical disc apparatus identifies the type of the optical disc 1 which is inserted as a BD when reading out a signal at the output of 0.3 mW, the optical disc apparatus identifies the type of the optical disc 1 inserted as a CD when a signal is read out at the output of 0.7 mW, and the optical disc apparatus identifies the type of the optical disc 1 inserted as a DVD when a signal is read out at the output of 1 mW.

Here, the optical disc apparatus can determine the type of the optical disc 1 by reading out the read-out power or the standard linear velocity written on the optical disc 1. Note that the read-out power and the standard linear velocity are previously written on the optical disc 1 in order not to cause reproduced beam deterioration unlike the other information recorded on the optical disc 1.

Also, it is possible to determine the type of the optical disc 1 according to the result of the judgment on whether the optical disc 1 is inserted into the optical disc apparatus in a predetermined case by the optical disc apparatus. In other words, a CD is inserted into the optical disc apparatus without being placed in a case, while a BD is inserted into the optical disc apparatus in a case. Therefore, the optical disc apparatus determines the type of the optical disc 1 according to the existence of the case.

Also, the linear velocity of the optical beam spot on the optical disc 1 is calculated from the radius location of the optical beam spot and the rotation velocity of the disc motor 114 in this embodiment and the variation, it is also possible to calculate the linear velocity considering the search direction and the moving velocity of the optical beam spot.

### (Second Embodiment)

The optical disc apparatus in a second embodiment of the present invention will be explained below with reference to figures.

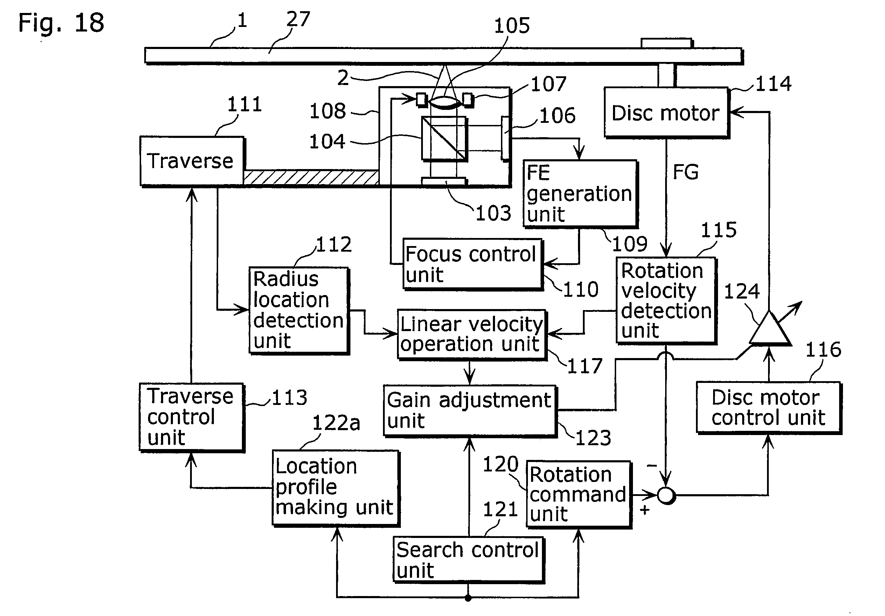

Fig. 18 is a structural diagram showing the structure of the optical disc apparatus in a second embodiment of the present invention.

This optical disc apparatus is improved in a prevention effect of the reproduced beam deterioration by controlling the rotation velocity of the optical disc, and comprises, similar to the first embodiment, an optical head 108, a traverse 111, a traverse control unit 113, an FE generation unit 109, a focus control unit 110, a rotation command unit 120, a disc motor 114, a rotation speed detection unit 115, a disc motor control unit 116, a radius location detection unit 112, a linear velocity operation unit 117, a search control unit 121, a location profile making unit 122a, a gain adjustment unit 123, and a gain increase unit 124.

Here, the same number assigned to the same unit in the first embodiment is assigned to respective one of the same unit in the function and the structure as the ones in the first embodiment out of the above-mentioned components equipped on the optical disc apparatus in this embodiment and explanations for these units are omitted.

The location profile making unit 122a in the embodiment makes the location profile to be a basic based on the search target radius location information from the search control unit 121.

The gain adjustment unit 123 instructs the gain increase unit 124 to prevent the linear velocity from decreasing to the predetermined value (the permissible linear velocity) during search based on the search radius direction information from the search control unit 121 and the linear velocity information from the linear velocity operation unit 117.

The gain increase unit 124 amplifies the motor drive signal outputted from the disc motor control unit 116 based on the instruction from the gain adjustment unit 123 and outputs the amplified motor drive signal to the disc motor 114. In other words, the gain increase unit 124 adjusts the gain of the motor drive signal outputted from the disc motor control unit 116.

In this embodiment, when the linear velocity is coming to the permissible linear velocity and below, the motor drive signal outputted from the disc motor control unit 116 is amplified and the disc motor 114 accelerates the rotation velocity of the optical disc 1. In this way, as the rotation velocity of the optical disc 1 is increased, it is possible to prevent the linear velocity from decreasing to the permissible linear velocity and below and thus prevent reproduced beam deterioration from occurring.

Here, the control of the disc motor 114 in this embodiment will be explained further.

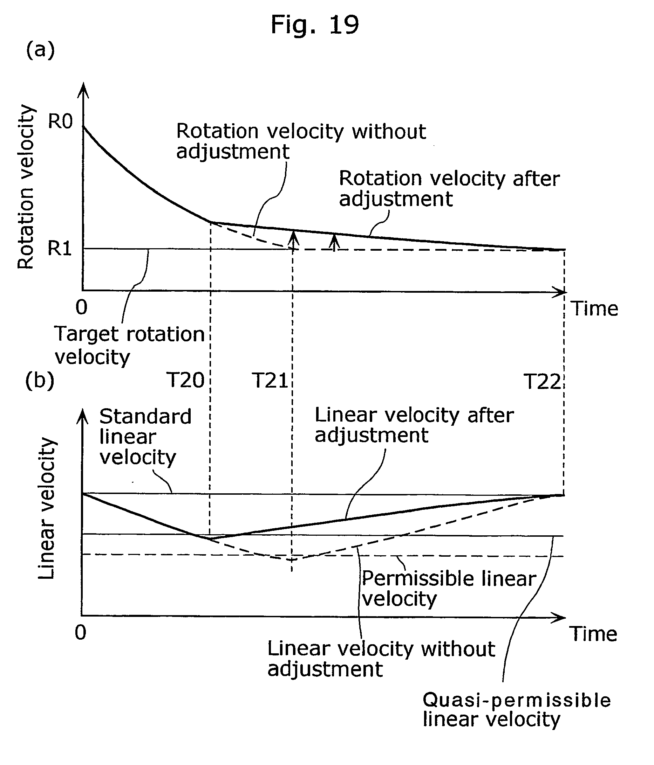

Fig. 19 is a property diagram when a search is performed from the inner radius to the outer radius of the optical disc 1, Fig. 19, in the case of (a), shows the property diagram of the rotation velocity of the optical disc 1, and Fig. 19, in the case of (b), shows the property diagram of the linear velocity of the optical beam spot.

For example, when a search is performed by moving the optical beam spot from the inner radius to the outer radius of the optical disc 1, the search control unit 121, the rotation instruction unit 120, and the disc motor control unit 116 decreases the rotation velocity of the optical disc 1 rotated by the disc motor 114 from velocity R0 to velocity R1 (target rotation velocity) so as to maintain the linear velocity in the inner radius and the outer radius.

Here, for example, when the gain adjustment unit 123 does not give the above-mentioned instruction to the gain increase unit 124, the gain is not adjusted to the motor drive signal from the disc motor control unit 116, as shown by the dotted line in (a) of Fig. 19, the disc motor 114 decreases the rotation velocity of the optical disc 1 from velocity R0 to velocity R1 during the time between time 0 of the search starting time and time T21 before time T22 when the optical beam spot reaches to the target radius location, and the disc motor 114 maintains the rotation velocity at velocity R1.

However, in this case, as shown by the dotted line in (b) of Fig. 19, the linear velocity gradually decreases from the standard linear velocity in response to the decrease of the rotation velocity of the optical disc 1 from time 0 of the search starting time and becomes slower than the permissible linear velocity at time T21. In other words, in this case, reproduced beam deterioration may occur in the conventional example.

However, in the present embodiment, the gain adjustment unit 123 gives the above-mentioned instruction to the gain increase unit 124 based on the linear velocity calculated by the linear velocity operation unit 117 and the motor drive signal outputted from the disc motor control unit 116 is amplified by the gain increase unit 124 and supplied to the disc motor 114, as shown by the solid line in (a) of Fig. 19, which leads to holding down the decreasing rotation velocity of the optical disc 1, and as a result, as shown by the solid line in (b) of Fig. 19, the linear velocity is maintained above the permissible linear velocity and thus it is possible to prevent reproduced beam deterioration from occurring.

In other words, when judging that the linear velocity decreases to the quasi-permissible linear velocity or below at time T20, the gain adjustment unit 123 instructs the gain increase unit 124 to amplify the motor drive signal. In other words, the gain increase unit 124 amplifies the motor drive signal outputted from the disc motor control unit 116 and outputs the motor drive signal to the disc motor 114. In this way, the disc motor 114 slows the decrease of the rotation velocity of the optical disc 1 after time T20, and makes the rotation velocity velocity R1 that is a target rotation velocity at time T22 when the optical beam spot reaches to the search target radius location. As a result, the linear velocity reaches to the standard linear velocity at time T22 after gradually rising and keeping above the permissible linear velocity after time T20 when the linear velocity decreased to the one below the quasi-permissible linear velocity.

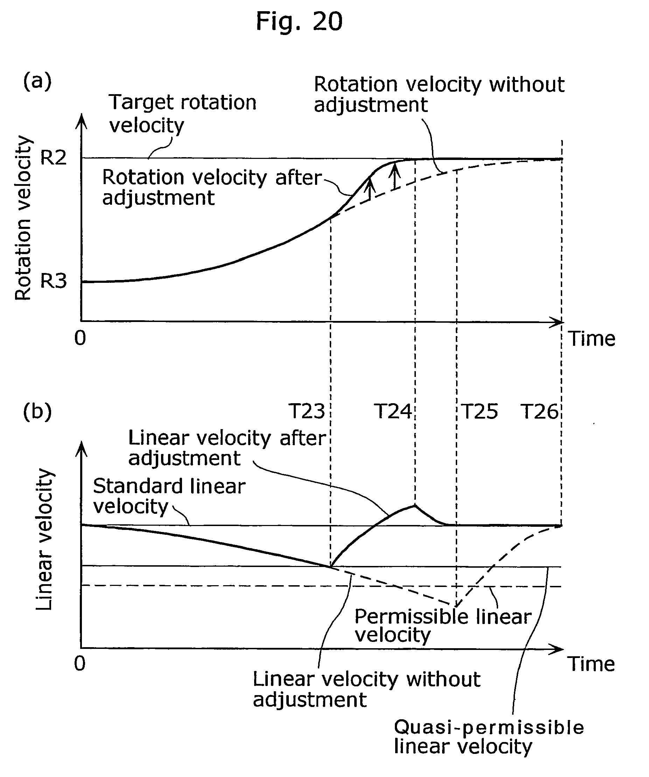

Fig. 20 is a property diagram when a search is performed from the outer radius to the inner radius of the optical disc 1, Fig. 20, in the case of (a), shows a property diagram of the rotation velocity of the optical disc 1, and Fig. 20, in the case of (b), shows a property diagram of the linear velocity of the optical beam spot.

For example, when a search is performed by moving the optical beam spot from the outer radius to the inner radius of the optical disc 1, the search control unit 121, the rotation instruction unit 120, and the disc motor control unit 116 increases the rotation velocity of the optical disc 1 rotated by the disc motor 14 from velocity R3 to velocity R2 as a target so as to maintain the linear velocity in the outer radius and in the inner radius.

Here, for example, any gain adjustment on the motor drive signal from the disc motor control unit 116 is not performed when the gain adjustment unit 123 does not give the above-mentioned instruction to the gain increase unit 124, as shown by the dotted line in (a) of Fig. 20, the disc motor 114 increases the rotation velocity of the optical disc 1 from velocity R3 to velocity R2 during the time from time 0 at the search starting time to time T26 after time T25 when the optical beam spot reaches to the target radius location.

However, in this case, as shown by the dotted line in (b) of Fig. 20, the linear velocity decreases from the search starting time of time 0 from the standard linear velocity in response to a movement into the inner radius direction of the optical beam spot by the traverse 111, and the linear velocity falls down to the slowest velocity that is slower than the permissible linear velocity just before the rotation velocity reaches to the target rotation velocity R2 and at time T25 when the optical beam spot reaches to the search target radius location. In other words, in this case, reproduced beam deterioration may occur like the conventional example. After time T25 when the traverse 111 stopped moving the optical beam spot to the radius direction, the linear velocity rises as the rotation velocity rises and reaches to the standard linear velocity at time T26.

However, in this embodiment, as the gain adjustment unit 123 gives the above-mentioned instruction to the gain increase unit 124 based on the linear velocity calculated by the linear velocity operation unit 117, and the drive signal outputted from the disc motor control unit 116 is amplified by the gain increase unit 124 and supplied to the disc motor 114, as shown by the dotted line in (a) of Fig. 20, the rotation velocity of the optical disc 1 is accelerated, and as a result, as shown by the solid line in (b) of Fig. 20, the linear velocity is maintained above the permissible linear velocity and it is possible to prevent reproduced beam deterioration from occurring.

In other words, the gain adjustment unit 123 instructs the gain increase unit 124 to amplify the drive signal when judging that the linear velocity decreased to the one below the quasi-permissible linear velocity at time T23. When receiving this instruction, the gain increase unit 124 adjusts the gain. In other words, the gain increase unit 124 amplifies the motor drive signal outputted from the disc motor control unit 116 and outputs the gain to the disc motor 114. In this way, the disc motor 114 sharply increases the rotation velocity of the optical disc 1 after time T23, and makes the rotation velocity R2 that is a target rotation velocity at time T22 when the optical beam spot reaches to the search target radius location at time T24 before the optical beam spot reaches to the search target radius location. As a result, the linear velocity gradually increases from time T23 and reaches to the maximum at time T24. And the linear velocity gradually decreases as the traverse 111 moves the optical beam spot to the radius direction and maintains the linear velocity at the standard linear velocity after time T25.

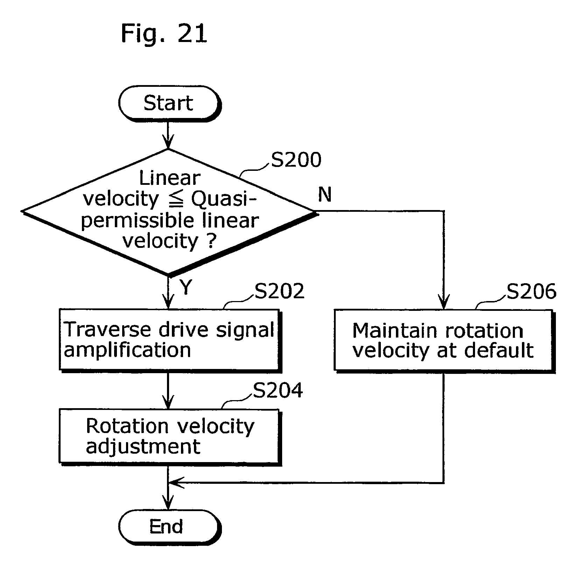

Fig. 21 is a flow chart showing the operation of the optical disc apparatus in this embodiment.

First, the optical disc apparatus judges whether the linear velocity is not more than the quasi-permissible linear velocity (step S200). And, when the linear velocity is judged to be not more than the quasi-permissible linear velocity (step S200 Y), the optical disc apparatus amplifies the motor drive signal (step S202), and adjusts the rotation velocity of the optical disc 1 (step S204). In other words, the optical disc apparatus slows the decrease of the rotation velocity of the optical disc 1 when searching from the inner radius to the outer radius, and sharply increases the rotation velocity of the optical disc 1 when searching from the outer radius to the inner radius.

In other words, when the linear velocity is judged to be not less than the quasi-permissible linear velocity (step S200 N), the optical disc apparatus does not perform amplification processing on the motor drive signal and maintains the rotation velocity of the optical disc 1 under the default condition (step S206).

In this way, this embodiment makes it possible to prevent reproduced beam deterioration from occurring even when some vibration is added to the traverse mechanism under search because reproduced beam deterioration is avoided by adjusting the rotation velocity of the optical disc 1 by the disc motor 14 and further, avoid the difficulty in controlling the focus location instead of avoiding reproduced beam deterioration by adjusting the focus of the optical beam 2 like the conventional example. Further, it is also possible to completely prevent reproduced beam deterioration from occurring without any limitation on the output range of the FE signal.

Also, in the present embodiment, it is possible to prevent reproduced beam deterioration from occurring without decreasing the search velocity because the location profile is not adjusted like in the first embodiment.

In this embodiment, the gain increase unit 124 amplifies the motor drive signal from the disc motor control unit 116 based on the instruction of the gain adjustment unit 123, the disc motor control unit 116 can apply an offset to the motor drive signal.

In this case, the disc motor 114 increases the rotation velocity of the optical disc 1 according to the additional offset when a search is performed from the outer radius to the inner radius, while the disc motor 114 decreases the rotation velocity of the optical disc 1 according to the additional offset predetermined as the target rotation velocity when a search is performed from the inner radius to the outer radius. As a result, it is possible to maintain the linear velocity of the optical beam spot on the optical disc 1 above the permissible linear velocity.

Also, the disc motor control unit 116 may adjust the target rotation velocity. In this case, the target rotation velocity is adjusted to a relatively high velocity until the optical beam spot reaches to the target radius location, and the rotation velocity of the optical disc is set to the target rotation velocity corresponding to the target radius location after the optical beam spot reaches to the target radius location.

In this case, the increase in the rotation velocity of the optical disc 1 by the disc motor 114 increases by the additional velocity predetermined as the target rotation velocity when a search is performed from the outer radius to the inner radius, while the decrease of the rotation velocity of the optical disc 1 by the disc motor 114 decreases by the additional velocity predetermined as the target rotation velocity when a search is performed from the inner radius to the outer radius. As a result, the linear velocity of the optical beam spot on the optical disc 1 is maintained faster than the permissible linear velocity.

Also, the first embodiment can be combined with this embodiment. In other words, it is possible to perform finer control by convertibly controlling the rotation velocity of the optical disc 1 by the disc motor 114 and the moving velocity of the optical beam spot by the traverse 111.

For example, as shown in (c) of Fig. 17, the rotation velocity of the optical disc 1 and the moving velocity of the optical beam spot are convertibly controlled according to the location of the optical disc information recording surface 27 of the optical disc 1 or the detail of the contents stored on the optical disc 1.

In this way, it is possible to completely prevent reproduced beam deterioration from occurring and improve the user-friendliness.

Note that it is also possible to adjust the gain of the motor drive signal outputted from the disc motor control unit 116 according to the type by judging the type of the optical disc 1 inserted into the optical disc apparatus also in this embodiment like the variation of the first embodiment.

### (Third Embodiment)

The optical disc apparatus in a third embodiment of the present invention will be explained below with reference to figures.

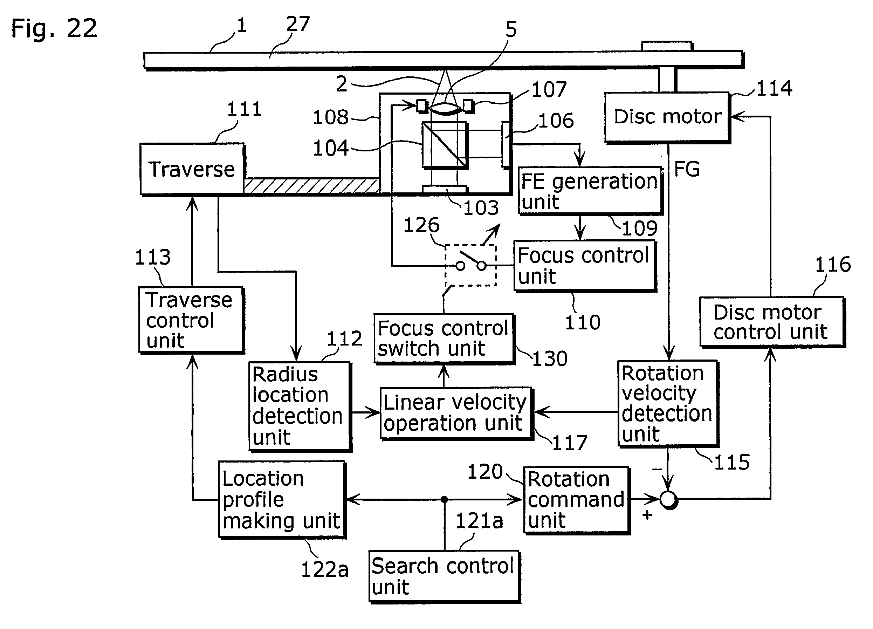

Fig. 22 is a structural diagram showing the structure of the optical disc apparatus in the third embodiment of the present invention.

This optical disc apparatus is improved in a prevention effect of the reproduced beam deterioration by prohibiting the focus control of the optical beam 2, and comprises, similar to the first embodiment, the optical head 108, the traverse 111, the traverse control unit 113, the FE generation unit 109, the focus control unit 110, the rotation command unit 120, the disc motor 114, the rotation speed detection unit 115, the disc motor control unit 116, the radius location detection unit 112, the linear velocity operation unit 117, a search control unit 121a, a location profile making unit 122a, a focus control switch unit 130, and a selector switch 126.

Here, the same number assigned to the same unit in the first embodiment is assigned to respective one of the same unit in the function and the structure as the ones in the first embodiment out of the above-mentioned components equipped on the optical disc apparatus in this embodiment and explanations for these units are omitted.

The search control unit 121a in the present embodiment outputs only search target radius information to the location profile making unit 122a and the rotation instruction unit 120 without outputting search radius direction information as the search control unit 121 in the first or the second embodiment.

The location profile making unit 122a makes the location profile to be a basic shown in Fig. 4 or Fig. 5 based on the search target radius location information from the search control unit 121.

The focus control switch unit 130 determines the linear velocity of the optical beam spot based on the linear velocity information from the linear velocity operation unit 117, outputs a disconnect signal for disconnecting the focus control unit 110 from the focus actuator 107 when the linear velocity is not more than the predetermined velocity (the quasi-permissible linear velocity) to the selector switch 126, and outputs a connection signal for connecting the focus control unit 110 with the focus actuator 107 when the linear velocity is slower than the quasi-permissible linear velocity.

The selector switch 126 connects the focus control unit 110 with the focus actuator 107 and executes the focus control of the focus actuator 107 by the focus control unit 110 on obtaining the connection signal from the focus control switch unit 130. On the other hand, the selector switch 126 disconnects the focus control unit 110 from the focus actuator 107 and finishes the focus control of the focus actuator 107 by the focus control unit 110 on obtaining the disconnection signal from the focus control switch unit 130.

Here, the quasi-permissible linear velocity is set for the focus control switch unit 130 as the velocity faster than the permissible linear velocity.

The focus control switch unit 130 in the present embodiment outputs a connection signal when the linear velocity becomes faster than the quasi-permissible linear velocity and a disconnection signal when the linear velocity becomes slower than the quasi-permissible linear velocity, but it is possible to previously outputs a connection signal so that the focus control is turned on when the linear velocity becomes faster than the quasi-permissible linear velocity or a disconnection signal so that the focus control is turned off when the linear velocity becomes slower than the quasi-permissible linear velocity considering the time when the focus control is turned on or turned off after the signal is outputted.

When the focus control is turned off as mentioned above, the area of the optical beam spot of the optical beam 2 which is irradiated by the optical head 108, on the optical disc information recording surface 27 of the optical disc 1 becomes greater than the one when the focus control is turned on.

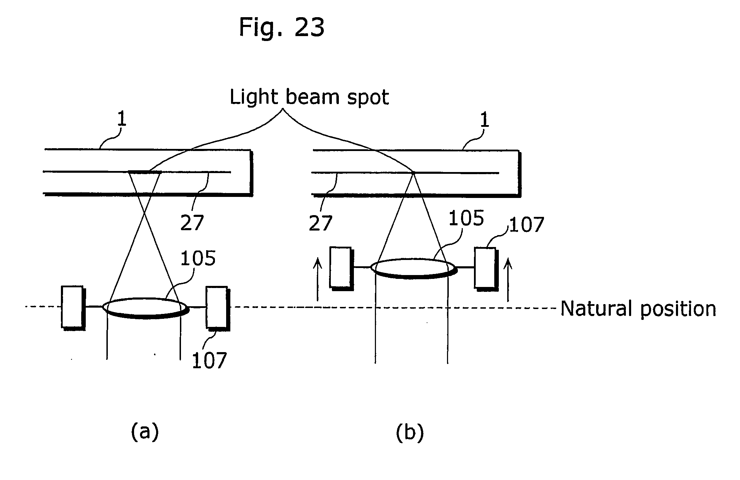

Fig. 23 is an illustration explaining how the area of the optical beam spot changes, Fig. 23, in the case of (a), shows the condition of the focus control being turned off, and Fig. 23, in the case of (b), shows the condition where the focus control is turned on.

As shown in (b) of Fig. 23, the focus actuator 107 moves the convergence lens 105 based on the control from the focus control unit 110 to the optical disc 1 side from the natural condition and puts the focus of the optical beam 2 on the optical disc information recording surface 27 of the optical disc 1 when the focus control is turned on. As a result, the area of the optical beam spot on the optical disc information recording surface 27 becomes very narrow.

However, the focus actuator 107 returns the convergence lens 105 to the natural condition as shown in (a) of Fig. 23 when the focus control is turned off. As a result, the focus of the optical beam 2 moves away from the optical disc 1 forward and the area of the optical beam spot becomes very big.

However, the distance between the focus and the optical disc information recording surface 27 is longer enough than the distance when the offset signal is outputted in the conventional example, it is possible to prevent the location of the beam focus from being put on the optical disc information recording surface 27.

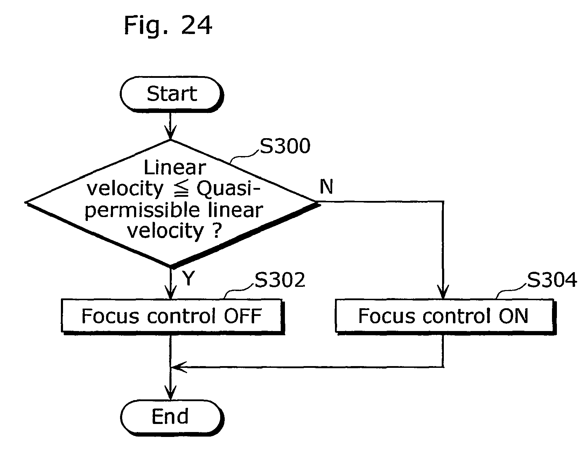

Fig. 24 is a flow chart showing the operation of the optical disc apparatus in the present invention.

First, the optical disc apparatus judges whether the linear velocity is not more than the quasi-permissible linear velocity (step S300). And, when the linear velocity is not more than the quasi-permissible linear velocity (step S300 Y), the optical disc apparatus turns off the focus control (step S302). On the other hand, when the linear velocity is judged to be not less than the quasi-permissible linear velocity (step S300 N), the optical disc apparatus turns on the focus control (step S304).

This embodiment prevents reproduced beam deterioration from occurring by stopping the focus control in stead of preventing reproduced beam deterioration from occurring by controlling the focus of the optical beam 2 using an offset signal like the conventional example, and thus it is possible to prevent reproduced beam deterioration from occurring triggered by vibration of the traverse mechanism during search, prevent the difficulty in controlling the focus location, and further, sufficiently prevent the reproduced beam deterioration from occurring without limiting the output range of the FE signal.

### Industrial Applicability

The optical disc apparatus concerning the present invention is suitable for an audio video (AV) apparatus which reads out data from a CD and a DVD and reproduces music and video or an optical disc drive which is built in a personal computer and the like.

## Claims

1. An optical disc apparatus for reading out information recorded on an optical disc (1) by irradiating an optical beam (2) on the optical disc (1), comprising:
a rotation unit (114) operable to rotate the optical disc (1);
a moving unit (111) operable to move a spot where the optical beam (2) is irradiated on the optical disc (1) in a radius direction of the optical disc (1);
a linear velocity detection unit (112) operable to detect a linear velocity of the spot;
a rotation control unit (116) operable to control the rotation unit (114) so that the linear velocity detected by the linear velocity detection unit (112) remains substantially constant on an arbitrary radius location on the optical disc (1), when information recorded on the optical disc (1) is read out; and
a moving time control unit (117) operable to control at least one of the rotation unit (114) and the moving unit (111) so as to prevent the linear velocity detected by the linear velocity detection unit (112) from decreasing to a permissible linear velocity or below, when the moving unit (111) moves the spot,
the optical disc apparatus being **characterised in that** it further comprises
a type distinction unit (201) operable to distinguish a type of the optical disc (1) to be an irradiation target of the optical beam (2),
wherein the moving time control unit (117) revises the permissible linear velocity according to the type of the optical disc (1) determined by the type distinction unit (201).

2. The optical disc apparatus according to Claim 1,
wherein, when moving the spot along the radius direction of the optical disc (1), the moving time control unit (117) makes a location profile indicating a relation between a radius location and a moving time corresponding to the movement of the spot and controls the moving unit (111) so that the spot is moved along the location profile, and
the moving time control unit (117) revises the location profile so as to prevent the linear velocity from decreasing and controls the moving unit (111) so that the spot is moved along the revised location profile as the linear velocity detected by the linear velocity detection unit (112) nears to the permissible linear velocity.

3. The optical disc apparatus according to Claim 2,
wherein the rotation control unit (116) makes the rotation unit (114) increase rotation velocity of the optical disc (1) when the moving unit (111) moves the spot from an outer radius to an inner radius of the optical disc (1), and
the moving time control unit (117) revises the location profile so that a moving velocity of the spot is decreased by the moving unit (111) when the linear velocity detected by the linear velocity detection unit (112) nears to the permissible linear velocity during the movement.

4. The optical disc apparatus according to Claim 2,
wherein the rotation control unit (116) makes the rotation unit (114) decrease the rotation velocity of the optical disc (1) when the moving unit (111) moves the spot from an inner radius to an outer radius of the optical disc (1), and
the moving time control unit (117) revises the location profile so that a moving velocity of the spot is increased by the moving unit (111) when the linear velocity detected by the linear velocity detection unit (112) nears to the permissible linear velocity during the movement.

5. The optical disc apparatus according to Claim 2,
wherein the moving unit (111) makes the location profile according to the type of the optical disc (1) determined by the type distinction unit (201).

6. The optical disc apparatus according to Claim 2, further comprising:
a focus error output unit (109) operable to output a focus error signal indicating a distance between a focus of the optical beam (2) and the optical disc (1); and
wherein the type distinction unit (201) distinguishes the type of the optical disc (1) based on the focus error signal outputted by the focus error output unit (109).

7. The optical disc apparatus according to Claim 2,
wherein the type distinction unit (201) identifies the optical beam (2) output necessary for reading out information from the optical disc (1) and determines the type of the optical disc (1) based on the distinction result.

8. The optical disc apparatus according to Claim 2,
wherein the linear velocity detection unit (112) detects the linear velocity based on a rotation velocity of the optical disc (1) and the radius location of the spot on the optical disc (1).

9. The optical disc apparatus according to Claim 8,
wherein the linear velocity detection unit (112) further detects the linear velocity based on moving velocity of the spot moved by the moving unit (111) to the radius direction.

10. The optical disc apparatus according to Claim 1,
wherein the moving time control unit (117) changes a moving velocity of the spot by the moving unit (111) so as to prevent the linear velocity from decreasing when the linear velocity detected by the linear velocity detection unit (112) nears to the permissible linear velocity.

11. The optical disc apparatus according to Claim 10,
wherein the rotation control unit (116) makes the rotation unit (114) increase a rotation velocity of the optical disc (1) when the moving unit (111) moves the spot from an outer radius to an inner radius of the optical disc (1), and
the moving time control unit (117) makes the moving unit (111) decrease the moving velocity of the spot when the linear velocity detected by the linear velocity detection unit (112) nears to the permissible linear velocity during the movement.

12. The optical disc apparatus according to Claim 10,
wherein the rotation control unit (116) makes the rotation unit (114) decrease a rotation velocity of the optical disc (1) when the moving unit (111) moves the spot from an inner radius to an outer radius of the optical disc (1), and
the moving time control unit (117) makes the moving unit (111) increase the moving velocity of the spot when the linear velocity detected by the linear velocity detection unit (112) nears to the permissible linear velocity during the movement.

13. The optical disc apparatus according to Claim 1,
wherein the moving unit (111) changes a moving velocity of the spot along the radius direction of the optical disc (1) according to a drive signal applied to the moving unit (111), and
the moving time control unit (117) changes the drive signal by applying an offset signal on the drive signal to increase or decrease the drive signal so as to prevent the linear velocity from decreasing when the linear velocity detected by the linear velocity detection unit (112) approaches the permissible linear velocity.

14. The optical disc apparatus according to Claim 13,
wherein the rotation control unit (116) makes the rotation unit (114) increase the rotation velocity of the optical disc (1) when the moving unit (111) moves the spot from an outer radius to an inner radius of the optical disc (1), and
the moving time control unit (117) applies an offset signal which makes it possible to decrease the moving velocity of the spot by the moving unit (111) when the linear velocity detected by the linear velocity detection unit (112) approaches the permissible linear velocity during the movement.

15. The optical disc apparatus according to Claim 13,
wherein the rotation control unit (116) makes the rotation unit (114) decrease the rotation velocity of the optical disc (1) when the moving unit (111) moves the spot from an inner radius to an outer radius of the optical disc (1), and
the moving time control unit (117) applies an offset signal which makes it possible to increase the moving velocity of the spot by the moving unit (111) when the linear velocity detected by the linear velocity detection unit (112) approaches the permissible linear velocity during the movement.

16. The optical disc apparatus according to Claim 1,
wherein the moving time control unit (117) adjusts a rotation velocity of the optical disc (1) by the rotation unit (114).

17. The optical disc apparatus according to Claim 16,
wherein the rotation unit (114) obtains a drive signal outputted by the rotation control unit (116) and changes the rotation velocity of the optical disc (1) according to the drive signal, and
the moving time control unit (117, 123, 124) amplifies the drive signal so as to prevent the linear velocity from decreasing when the linear velocity detected by the linear velocity detection unit (112) nears to the permissible linear velocity.

18. The optical disc apparatus according to Claim 16,
wherein the rotation unit (114) obtains a drive signal outputted by the rotation control unit (116) and changes the rotation velocity of the optical disc (1) according to the drive signal, and
the moving time control unit (117, 123, 124) applies an offset signal on the drive signal and changes the drive signal so as to prevent the linear velocity from decreasing when the linear velocity detected by the linear velocity detection unit (112) nears to the permissible linear velocity.

19. The optical disc apparatus according to Claim 16,
wherein the moving time control unit (117) makes the rotation unit (114) transit the rotation velocity of the optical disc (1) so as to make the rotation velocity of the optical disc (1) faster than the rotation velocity corresponding to a target radius location at the time when the spot reaches to the target radius location of the spot when the moving unit (111) moves the spot to the target radius location along the radius direction of the optical disc (1) .

20. An irradiation method for irradiating an optical beam (2) on an optical disc (1), the optical beam (2) being for reading out information recorded on an optical disc (1), comprising:
a rotation step in which a motor (114) rotates the optical disc (1);
a moving step in which a traverse (111) moves a spot on the optical disc (1) irradiated with the optical beam (2) to a radius direction of the optical disc (1);
a linear velocity detection step of detecting a linear velocity of the spot;
a rotation control step of controlling the motor (114) so that the linear velocity detected in the linear velocity detection step remains substantially constant in an arbitrary radius location on the optical disc (1) when information recorded on the optical disc (1) is read out; and
a moving time control step of controlling at least one of the motor (114) and the traverse (111) so as to prevent the linear velocity detected in the linear velocity detection step from decreasing to a permissible linear velocity or below when the spot is moved by the traverse (111);
the method being **characterised in that** it further comprises
a type determination step of determining the type of the optical disc (1) to be an irradiation target of the optical beam (2),
wherein, in the moving time control step, the permissible linear velocity is changed according to the type of the optical disc (1) that is judged in the type determination step.

21. The irradiation method for the optical beam (2) according to Claim 20,
wherein, in the moving time control step, a location profile showing a relation between a radius location and moving time corresponding to the movement is made, the traverse (111) is controlled so that the spot moves along the location profile, and
the location profile is revised so as to prevent the linear velocity from decreasing when the linear velocity detected in the linear velocity detection step nears to the permissible linear velocity, and the traverse (111) is controlled so that the spot is moved along the revised location profile.

22. The irradiation method for the optical beam (2) according to Claim 20,
wherein, in the moving time control step,
the rotation velocity of the optical disc (1) by the motor (114) is adjusted.

23. A program for making a computer execute an irradiation method for irradiating an optical beam (2) on an optical disc (1), the optical beam (2) being for reading out information recorded on the optical disc (1), comprising:
a rotation step in which a motor (114) rotates the optical disc (1);
a moving step in which a traverse (111) moves a spot on the optical disc (1) irradiated by the optical beam (2) to a radius direction of the optical disc (1);
a linear velocity detection step of detecting a linear velocity of the spot;
a rotation control step of controlling a motor (114) so that the linear velocity detected in the linear velocity detection step remains substantially constant in an arbitrary radius location on the optical disc (1) when information recorded on the optical disc (1) is read out;
a moving time control step of controlling at least one of the motor (114) and the traverse (111) so as to prevent the linear velocity detected in the linear velocity detection step from decreasing to a permissible linear velocity or below when the spot is moved by the traverse (111);
**characterised** that the irradiation method further comprises
a type determination step of determining a type of the optical disc (1) to be an irradiation target of the optical beam (2),
wherein, in the moving time control step, the permissible linear velocity is changed according to the type of the optical disc (1) determined in the type determination step.

24. The program according to Claim 23,
wherein, in the moving time control step, a location profile showing a relation between a radius location and moving time corresponding to the movement, and the traverse (111) is controlled so that the spot moves along the location profile, and
the location profile is revised so as to prevent the linear velocity from decreasing, and the traverse (111) is controlled so that the spot moves along the revised location profile when the linear velocity detected in the linear velocity detection step nears to the permissible linear velocity.

25. The program according to Claim 23,
wherein, in the moving time control step,
a rotation velocity of the optical disc (1) by the motor (114) is adjusted.

## Patentansprüche

1. Optische-Platten-Vorrichtung zum Auslesen von Informationen, die durch Bestrahlen einer optischen Platte (1) mit einem optischen Strahl (2) auf die optische Platte (1) aufgezeichnet worden sind, mit:
einer Dreheinheit (114), die so betreibbar ist, dass sie die optische Platte (1) dreht;
einer Verschiebungseinheit (111), die so betreibbar ist, dass sie einen Punkt, an dem die optische Platte (1) mit dem optischen Strahl (2) bestrahlt wird, in einer Radialrichtung der optischen Platte (1) verschiebt;
einer Lineargeschwindigkeits-Ermittlungseinheit (112), die so betreibbar ist, dass sie eine Lineargeschwindigkeit des Punkts ermittelt;
einer Drehsteuereinheit (116), die so betreibbar ist, dass sie die Dreheinheit (114) so steuert, dass die von der Lineargeschwindigkeits-Ermittlungseinheit (112) ermittelte Lineargeschwindigkeit an einer beliebigen Radialposition auf der optischen Platte (1) im Wesentlichen konstant bleibt, wenn auf der optischen Platte (1) aufgezeichnete Informationen ausgelesen werden; und
einer Verschiebungszeit-Steuereinheit (117), die so betreibbar ist, dass sie die Dreheinheit (114) und/oder die Verschiebungseinheit (111) so steuert, dass vermieden wird, dass die von der Lineargeschwindigkeits-Ermittlungseinheit (112) ermittelte Lineargeschwindigkeit auf eine zulässige Lineargeschwindigkeit oder darunter sinkt, wenn die Verschiebungseinheit (111) den Punkt verschiebt,
**dadurch gekennzeichnet, dass** die Optische-Platten-Vorrichtung weiterhin eine Typenerkennungseinheit (201) aufweist, die so betreibbar ist, dass sie einen Typ der optischen Platte (1) als Bestrahlungsziel des optischen Strahls (2) erkennt,
wobei die Verschiebungszeit-Steuereinheit (117) die zulässige Lineargeschwindigkeit entsprechend dem von der Typenerkennungseinheit (201) ermittelten Typ der optischen Platte (1) ändert.

2. Optische-Platten-Vorrichtung nach Anspruch 1, **dadurch gekennzeichnet, dass**
beim Verschieben des Punkts entlang der Radialrichtung der optischen Platte (1) die Verschiebungszeit-Steuereinheit (117) ein Lageprofil erstellt, das eine Beziehung zwischen einer Radialposition und einer Verschiebungszeit aufzeigt, die der Verschiebung des Punkts entspricht, und die Verschiebungseinheit (111) so steuert, dass der Punkt entlang dem Lageprofil verschoben wird, und
die Verschiebungszeit-Steuereinheit (117) das Lageprofil so ändert, dass vermieden wird, dass die Lineargeschwindigkeit sinkt, und die Verschiebungseinheit (111) so steuert, dass der Punkt entlang dem geänderten Lageprofil verschoben wird, wenn sich die von der Lineargeschwindigkeits-Ermittlungseinheit (112) ermittelte Lineargeschwindigkeit der zulässigen Lineargeschwindigkeit nähert.

3. Optische-Platten-Vorrichtung nach Anspruch 2, **dadurch gekennzeichnet, dass**
die Drehsteuereinheit (116) die Dreheinheit (114) die Drehgeschwindigkeit der optischen Platte (1) erhöhen lässt, wenn die Verschiebungseinheit (111) den Punkt von einem Außenradius zu einem Innenradius der optischen Platte (1) verschiebt, und
die Verschiebungszeit-Steuereinheit (117) das Lageprofil so ändert, dass eine Verschiebungsgeschwindigkeit des Punkts von der Verschiebungseinheit (111) verringert wird, wenn sich während der Verschiebung die von der Lineargeschwindigkeits-Ermittlungseinheit (112) ermittelte Lineargeschwindigkeit der zulässigen Lineargeschwindigkeit nähert.

4. Optische-Platten-Vorrichtung nach Anspruch 2, **dadurch gekennzeichnet, dass**
die Drehsteuereinheit (116) die Dreheinheit (114) die Drehgeschwindigkeit der optischen Platte (1) verringern lässt, wenn die Verschiebungseinheit (111) den Punkt von einem Innenradius zu einem Außenradius der optischen Platte (1) verschiebt, und
die Verschiebungszeit-Steuereinheit (117) das Lageprofil so ändert, dass eine Verschiebungsgeschwindigkeit des Punkts von der Verschiebungseinheit (111) erhöht wird, wenn sich während der Verschiebung die von der Lineargeschwindigkeits-Ermittlungseinheit (112) ermittelte Lineargeschwindigkeit der zulässigen Lineargeschwindigkeit nähert.

5. Optische-Platten-Vorrichtung nach Anspruch 2, **dadurch gekennzeichnet, dass** die Verschiebungseinheit (111) das Lageprofil entsprechend dem von der Typenerkennungseinheit (201) ermittelten Typ der optischen Platte (1) erstellt.

6. Optische-Platten-Vorrichtung nach Anspruch 2, die weiterhin eine Brennpunktfehler-Ausgabeeinheit (109) aufweist, die so betreibbar ist, dass sie ein Brennpunktfehlersignal ausgibt, das einen Abstand zwischen einem Brennpunkt des optischen Strahls (2) und der optischen Platte (1) angibt,
wobei die Typenerkennungseinheit (201) den Typ der optischen Platte (1) aufgrund des von der Brennpunktfehler-Ausgabeeinheit (109) ausgegebenen Brennpunktfehlersignals erkennt.

7. Optische-Platten-Vorrichtung nach Anspruch 2, **dadurch gekennzeichnet, dass** die Typenerkennungseinheit (201) den ausgegebenen optischen Strahl (2) identifiziert, der zum Auslesen von Informationen von der optischen Platte (1) benötigt wird, und den Typ der optischen Platte (1) aufgrund des Erkennungsergebnisses bestimmt.

8. Optische-Platten-Vorrichtung nach Anspruch 2, **dadurch gekennzeichnet, dass** die Lineargeschwindigkeits-Ermittlungseinheit (112) die Lineargeschwindigkeit aufgrund einer Drehgeschwindigkeit der optischen Platte (1) und der Radialposition des Punkts auf der optischen Platte (1) ermittelt.

9. Optische-Platten-Vorrichtung nach Anspruch 8, **dadurch gekennzeichnet, dass** die Lineargeschwindigkeits-Ermittlungseinheit (112) die Lineargeschwindigkeit weiterhin aufgrund der Verschiebungsgeschwindigkeit des von der Verschiebungseinheit (111) in Radialrichtung verschobenen Punkts ermittelt.

10. Optische-Platten-Vorrichtung nach Anspruch 1, **dadurch gekennzeichnet, dass** die Verschiebungszeit-Steuereinheit (117) eine Verschiebungsgeschwindigkeit des Punkts mit der Verschiebungseinheit (111) so ändert, dass vermieden wird, dass die Lineargeschwindigkeit sinkt, wenn sich die von der Lineargeschwindigkeits-Ermittlungseinheit (112) ermittelte Lineargeschwindigkeit der zulässigen Lineargeschwindigkeit nähert.

11. Optische-Platten-Vorrichtung nach Anspruch 10, **dadurch gekennzeichnet, dass**
die Drehsteuereinheit (116) die Dreheinheit (114) eine Drehgeschwindigkeit der optischen Platte (1) erhöhen lässt, wenn die Verschiebungseinheit (111) den Punkt von einem Außenradius zu einem Innenradius der optischen Platte (1) verschiebt, und
die Verschiebungszeit-Steuereinheit (117) die Verschiebungseinheit (111) die Verschiebungsgeschwindigkeit des Punkts verringern lässt, wenn sich während der Verschiebung die von der Lineargeschwindigkeits-Ermittlungseinheit (112) ermittelte Lineargeschwindigkeit der zulässigen Lineargeschwindigkeit nähert.

12. Optische-Platten-Vorrichtung nach Anspruch 10, **dadurch gekennzeichnet, dass**
die Drehsteuereinheit (116) die Dreheinheit (114) eine Drehgeschwindigkeit der optischen Platte (1) verringern lässt, wenn die Verschiebungseinheit (111) den Punkt von einem Innenradius zu einem Außenradius der optischen Platte (1) verschiebt, und
die Verschiebungszeit-Steuereinheit (117) die Verschiebungseinheit (111) die Verschiebungsgeschwindigkeit des Punkts erhöhen lässt, wenn sich während der Verschiebung die von der Lineargeschwindigkeits-Ermittlungseinheit (112) ermittelte Lineargeschwindigkeit der zulässigen Lineargeschwindigkeit nähert.

13. Optische-Platten-Vorrichtung nach Anspruch 1, **dadurch gekennzeichnet, dass**
die Verschiebungseinheit (111) eine Verschiebungsgeschwindigkeit des Punkts entlang der Radialrichtung der optischen Platte (1) entsprechend einem an die Verschiebungseinheit (111) angelegten Ansteuersignal ändert und
die Verschiebungszeit-Steuereinheit (117) das Ansteuersignal durch Überlagern des Ansteuersignals mit einem Verschiebungssignal so ändert, dass das Ansteuersignal erhöht oder verringert wird, sodass vermieden wird, dass die Lineargeschwindigkeit sinkt, wenn sich die von der Lineargeschwindigkeits-Ermittlungseinheit (112) ermittelte Lineargeschwindigkeit der zulässigen Lineargeschwindigkeit nähert.

14. Optische-Platten-Vorrichtung nach Anspruch 13, **dadurch gekennzeichnet, dass**
die Drehsteuereinheit (116) die Dreheinheit (114) die Drehgeschwindigkeit der optischen Platte (1) erhöhen lässt, wenn die Verschiebungseinheit (111) den Punkt von einem Außenradius zu einem Innenradius der optischen Platte (1) verschiebt, und
die Verschiebungszeit-Steuereinheit (117) ein Verschiebungssignal anlegt, das es ermöglicht, die Verschiebungsgeschwindigkeit des Punkts mit der Verschiebungseinheit (111) zu verringern, wenn sich während der Verschiebung die von der Lineargeschwindigkeits-Ermittlungseinheit (112) ermittelte Lineargeschwindigkeit der zulässigen Lineargeschwindigkeit nähert.

15. Optische-Platten-Vorrichtung nach Anspruch 13, **dadurch gekennzeichnet, dass**
die Drehsteuereinheit (116) die Dreheinheit (114) die Drehgeschwindigkeit der optischen Platte (1) verringern lässt, wenn die Verschiebungseinheit (111) den Punkt von einem Innenradius zu einem Außenradius der optischen Platte (1) verschiebt, und
die Verschiebungszeit-Steuereinheit (117) ein Verschiebungssignal anlegt, das es ermöglicht, die Verschiebungsgeschwindigkeit des Punkts mit der Verschiebungseinheit (111) zu erhöhen, wenn sich während der Verschiebung die von der Lineargeschwindigkeits-Ermittlungseinheit (112) ermittelte Lineargeschwindigkeit der zulässigen Lineargeschwindigkeit nähert.

16. Optische-Platten-Vorrichtung nach Anspruch 1, **dadurch gekennzeichnet, dass** die Verschiebungszeit-Steuereinheit (117) eine Drehgeschwindigkeit der optischen Platte (1) mit der Dreheinheit (114) einstellt.

17. Optische-Platten-Vorrichtung nach Anspruch 16, **dadurch gekennzeichnet, dass**
die Dreheinheit (114) ein von der Drehsteuereinheit (116) ausgegebenes Ansteuersignal erhält und die Drehgeschwindigkeit der optischen Platte (1) entsprechend dem Ansteuersignal ändert und
die Verschiebungszeit-Steuereinheit (117, 123, 124) das Ansteuersignal so verstärkt, dass vermieden wird, dass die Lineargeschwindigkeit sinkt, wenn sich die von der Lineargeschwindigkeits-Ermittlungseinheit (112) ermittelte Lineargeschwindigkeit der zulässigen Lineargeschwindigkeit nähert.

18. Optische-Platten-Vorrichtung nach Anspruch 16, **dadurch gekennzeichnet, dass**
die Dreheinheit (114) ein von der Drehsteuereinheit (116) ausgegebenes Ansteuersignal erhält und die Drehgeschwindigkeit der optischen Platte (1) entsprechend dem Ansteuersignal ändert und
die Verschiebungszeit-Steuereinheit (117, 123, 124) das Ansteuersignal mit einem Verschiebungssignal überlagert und das Ansteuersignal so ändert, dass vermieden wird, dass die Lineargeschwindigkeit sinkt, wenn sich die von der Lineargeschwindigkeits-Ermittlungseinheit (112) ermittelte Lineargeschwindigkeit der zulässigen Lineargeschwindigkeit nähert.

19. Optische-Platten-Vorrichtung nach Anspruch 16, **dadurch gekennzeichnet, dass** die Verschiebungszeit-Steuereinheit (117) die Dreheinheit (114) die Drehgeschwindigkeit der optischen Platte (1) so ändern lässt, dass die Drehgeschwindigkeit der optischen Platte (1) höher als die Drehgeschwindigkeit wird, die einer Soll-Radialposition zu dem Zeitpunkt entspricht, zu dem der Punkt die Soll-Radialposition des Punkts erreicht, wenn die Verschiebungseinheit (111) den Punkt entlang der Radialrichtung der optischen Platte (1) zu der Soll-Radialposition verschiebt.

20. Bestrahlungsverfahren zum Bestrahlen einer optischen Platte (1) mit einem optischen Strahl (2), der zum Auslesen von auf einer optischen Platte (1) aufgezeichneten Informationen dient, mit:
einem Drehschritt, in dem ein Motor (114) die optische Platte (1) dreht;
einem Verschiebungsschritt, in dem eine Traverse (111) einen Punkt auf der mit dem optischen Strahl (2) bestrahlten optischen Platte (1) in einer Radialrichtung der optischen Platte (1) verschiebt;
einem Lineargeschwindigkeits-Ermittlungsschritt zum Ermitteln einer Lineargeschwindigkeit des Punkts;
einem Drehsteuerschritt zum Steuern des Motors (114) so, dass die in dem Lineargeschwindigkeits-Ermittlungsschritt ermittelte Lineargeschwindigkeit an einer beliebigen Radialposition auf der optischen Platte (1) im Wesentlichen konstant bleibt, wenn auf der optischen Platte (1) aufgezeichnete Informationen ausgelesen werden; und
einem Verschiebungszeit-Steuerschritt zum Steuern des Motors (114) und/oder der Traverse (111) so, dass vermieden wird, dass die in dem Lineargeschwindigkeits-Ermittlungsschritt ermittelte Lineargeschwindigkeit auf eine zulässige Lineargeschwindigkeit oder darunter sinkt, wenn der Punkt von der Traverse (111) verschoben wird,
**dadurch gekennzeichnet, dass** das Verfahren weiterhin einen Typenbestimmungsschritt zum Bestimmen des Typs der optischen Platte (1) als Bestrahlungsziel des optischen Strahls (2) aufweist,
wobei in dem Verschiebungszeit-Steuerschritt die zulässige Lineargeschwindigkeit entsprechend dem in dem Typenbestimmungsschritt ermittelten Typ der optischen Platte (1) geändert wird.

21. Bestrahlungsverfahren für den optischen Strahl (2) nach Anspruch 20, **dadurch gekennzeichnet, dass**
in dem Verschiebungszeit-Steuerschritt ein Lageprofil erstellt wird, das eine Beziehung zwischen einer Radialposition und einer der Verschiebung entsprechenden Verschiebungszeit aufzeigt, wobei die Traverse (111) so gesteuert wird, dass sich der Punkt entlang dem Lageprofil bewegt, und
das Lageprofil so geändert wird, dass vermieden wird, dass die Lineargeschwindigkeit sinkt, wenn sich die in dem Lineargeschwindigkeits-Ermittlungsschritt ermittelte Lineargeschwindigkeit der zulässigen Lineargeschwindigkeit nähert, und die Traverse (111) so gesteuert wird, dass der Punkt entlang dem geänderten Lageprofil verschoben wird.

22. Bestrahlungsverfahren für den optischen Strahl (2) nach Anspruch 20, **dadurch gekennzeichnet, dass** in dem Verschiebungszeit-Steuerschritt die Drehgeschwindigkeit der optischen Platte (1) von dem Motor (114) eingestellt wird.

23. Programm zum Veranlassen eines Computers, ein Bestrahlungsverfahren zum Bestrahlen einer optischen Platte (1) mit einem optischen Strahl (2) durchzuführen, der zum Auslesen von auf der optischen Platte (1) aufgezeichneten Informationen dient, mit:
einem Drehschritt, in dem ein Motor (114) die optische Platte (1) dreht;
einem Verschiebungsschritt, in dem eine Traverse (111) einen Punkt auf der mit dem optischen Strahl (2) bestrahlten optischen Platte (1) in einer Radialrichtung der optischen Platte (1) verschiebt;
einem Lineargeschwindigkeits-Ermittlungsschritt zum Ermitteln einer Lineargeschwindigkeit des Punkts;
einem Drehsteuerschritt zum Steuern des Motors (114) so, dass die in dem Lineargeschwindigkeits-Ermittlungsschritt ermittelte Lineargeschwindigkeit an einer beliebigen Radialposition auf der optischen Platte (1) im Wesentlichen konstant bleibt, wenn auf der optischen Platte (1) aufgezeichnete Informationen ausgelesen werden; und
einem Verschiebungszeit-Steuerschritt zum Steuern des Motors (114) und/oder der Traverse (111) so, dass vermieden wird, dass die in dem Lineargeschwindigkeits-Ermittlungsschritt ermittelte Lineargeschwindigkeit auf eine zulässige Lineargeschwindigkeit oder darunter sinkt, wenn der Punkt von der Traverse (111) verschoben wird,
**dadurch gekennzeichnet, dass** das Bestrahlungsverfahren weiterhin einen Typenbestimmungsschritt zum Bestimmen eines Typs der optischen Platte (1) als Bestrahlungsziel des optischen Strahls (2) aufweist,
wobei in dem Verschiebungszeit-Steuerschritt die zulässige Lineargeschwindigkeit entsprechend dem in dem Typenbestimmungsschritt bestimmten Typ der optischen Platte (1) geändert wird.

24. Programm nach Anspruch 23, **dadurch gekennzeichnet, dass**
in dem Verschiebungszeit-Steuerschritt ein Lageprofil erstellt wird, das eine Beziehung zwischen einer Radialposition und einer der Verschiebung entsprechenden Verschiebungszeit aufzeigt, und die Traverse (111) so gesteuert wird, dass sich der Punkt entlang dem Lageprofil bewegt, und
das Lageprofil so geändert wird, dass vermieden wird, dass die Lineargeschwindigkeit sinkt, und die Traverse (111) so gesteuert wird, dass sich der Punkt entlang dem geänderten Lageprofil bewegt, wenn sich die in dem Lineargeschwindigkeits-Ermittlungsschritt ermittelte Lineargeschwindigkeit der zulässigen Lineargeschwindigkeit nähert.

25. Programm nach Anspruch 23, **dadurch gekennzeichnet, dass** in dem Verschiebungszeit-Steuerschritt eine Drehgeschwindigkeit der optischen Platte (1) von dem Motor (114) eingestellt wird.

## Revendications

1. Appareil à disque optique destiné à extraire des informations enregistrées sur un disque optique (1) en irradiant un faisceau optique (2) sur le disque optique (1), comprenant :
une unité de rotation (114) pouvant être actionnée pour faire tourner le disque optique (1) ;
une unité de déplacement (111) pouvant être actionnée pour déplacer un point lorsque le faisceau optique (2) est irradié sur le disque optique (1) dans un sens du rayon du disque optique (1) ;
une unité de détection de vitesse linéaire (112) pouvant être actionnée pour détecter une vitesse linéaire du point ;
une unité de commande de rotation (116) pouvant être actionnée pour commander l'unité de rotation (114) de sorte que la vitesse linéaire détectée par l'unité de détection de vitesse linéaire (112) reste sensiblement constante sur un emplacement de rayon arbitraire sur le disque optique (1), lorsque les informations enregistrées sur le disque optique (1) sont extraites ; et
une unité de commande de temps de déplacement (117) pouvant être actionnée pour commander au moins l'une parmi l'unité de rotation (114) et l'unité de déplacement (111) de façon à empêcher que la vitesse linéaire détectée par l'unité de détection de vitesse linéaire (112) diminue à une vitesse linéaire admissible ou au-dessous, lorsque l'unité de déplacement (111) déplace le point,
l'appareil à disque optique étant **caractérisé en ce qu'**il comprend de plus
une unité de distinction de type (201) pouvant être actionnée pour distinguer un type de disque optique (1) devant être une cible d'irradiation du faisceau optique (2),
dans lequel l'unité de commande de temps de déplacement (117) corrige la vitesse linéaire admissible selon le type de disque optique (1) déterminé par l'unité de distinction de type (201).

2. Appareil à disque optique selon la revendication 1,
dans lequel, lors du déplacement du point selon le sens du rayon du disque optique (1), l'unité de commande de temps de déplacement (117) effectue un profil d'emplacement indiquant une relation entre un emplacement de rayon et un temps de déplacement correspondant au déplacement du point et commande l'unité de déplacement (111) de sorte que le point est déplacé selon le profil d'emplacement, et
l'unité de commande de temps de déplacement (117) corrige le profil d'emplacement de façon à empêcher la vitesse linéaire de diminuer et commande l'unité de déplacement (111) de sorte que le point est déplacé selon le profil d'emplacement corrigé à mesure que la vitesse linéaire détectée par l'unité de détection de vitesse linéaire (112) approche la vitesse linéaire admissible.

3. Appareil à disque optique selon la revendication 2,
dans lequel l'unité de commande de rotation (116) amène l'unité de rotation (114) à augmenter la vitesse de rotation du disque optique (1) lorsque l'unité de déplacement (111) déplace le point d'un rayon extérieur à un rayon intérieur du disque optique (1), et
l'unité de commande de temps de déplacement (117) corrige le profil d'emplacement de sorte qu'une vitesse de déplacement du point est diminuée par l'unité de déplacement (111) lorsque la vitesse linéaire détectée par l'unité de détection de vitesse linéaire (112) approche la vitesse linéaire admissible pendant le déplacement.

4. Appareil à disque optique selon la revendication 2,
dans lequel l'unité de commande de rotation (116) amène l'unité de rotation (114) à diminuer la vitesse de rotation du disque optique (1) lorsque l'unité de déplacement (111) déplace le point d'un rayon intérieur à un rayon extérieur du disque optique (1), et
l'unité de commande de temps de déplacement (117) corrige le profil d'emplacement de sorte qu'une vitesse de déplacement du point est augmentée par l'unité de déplacement (111) lorsque la vitesse linéaire détectée par l'unité de détection de vitesse linéaire (112) approche la vitesse linéaire admissible pendant le déplacement.

5. Appareil à disque optique selon la revendication 2,
dans lequel l'unité de déplacement (111) effectue le profil d'emplacement selon le type de disque optique (1) déterminé par l'unité de distinction de type (201).

6. Appareil à disque optique selon la revendication 2, comprenant de plus:
une unité de sortie d'erreur de focalisation (109) pouvant être actionnée pour délivrer en sortie un signal d'erreur de focalisation indiquant une distance entre une focalisation du faisceau optique (2) et le disque optique (1) ; et
dans lequel l'unité de distinction de type (201) distingue le type de disque optique (1) sur la base du signal d'erreur de focalisation délivré en sortie par l'unité de sortie d'erreur de focalisation (109).

7. Appareil à disque optique selon la revendication 2,
dans lequel l'unité de distinction de type (201) identifie le faisceau optique (2) délivré en sortie nécessaire pour extraire des informations du disque optique (1) et détermine le type de disque optique (1) sur la base du résultat de distinction.

8. Appareil à disque optique selon la revendication 2,
dans lequel l'unité de détection de vitesse linéaire (112) détecte la vitesse linéaire sur la base d'une vitesse de rotation du disque optique (1) et de l'emplacement de rayon du point sur le disque optique (1).

9. Appareil à disque optique selon la revendication 8,
dans lequel l'unité de détection de vitesse linéaire (112) détecte de plus la vitesse linéaire sur la base de la vitesse de déplacement du point déplacé par l'unité de déplacement (111) par rapport au sens du rayon.

10. Appareil à disque optique selon la revendication 1,
dans lequel l'unité de commande de temps de déplacement (117) change une vitesse de déplacement du point par l'unité de déplacement (111) de façon à empêcher que la vitesse linéaire diminue lorsque la vitesse linéaire détectée par l'unité de détection de vitesse linéaire (112) approche la vitesse linéaire admissible.

11. Appareil à disque optique selon la revendication 10,
dans lequel l'unité de commande de rotation (116) amène l'unité de rotation (114) à augmenter une vitesse de rotation du disque optique (1) lorsque l'unité de déplacement (111) déplace le point d'un rayon extérieur à un rayon intérieur du disque optique (1), et
l'unité de commande de temps de déplacement (117) amène l'unité de déplacement (111) à diminuer la vitesse de déplacement du point lorsque la vitesse linéaire détectée par l'unité de détection de vitesse linéaire (112) approche la vitesse linéaire admissible pendant le déplacement.

12. Appareil à disque optique selon la revendication 10,
dans lequel l'unité de commande de rotation (116) amène l'unité de rotation (114) à diminuer une vitesse de rotation du disque optique (1) lorsque l'unité de déplacement (111) déplace le point d'un rayon intérieur à un rayon extérieur du disque optique (1), et
l'unité de commande de temps de déplacement (117) amène l'unité de déplacement (111) à augmenter la vitesse de déplacement du point lorsque la vitesse linéaire détectée par l'unité de détection de vitesse linéaire (112) approche la vitesse linéaire admissible pendant le déplacement.

13. Appareil à disque optique selon la revendication 1,
dans lequel l'unité de déplacement (111) change une vitesse de déplacement du point selon le sens du rayon du disque optique (1) conformément à un signal d'attaque appliqué à l'unité de déplacement (111), et
l'unité de commande de temps de déplacement (117) change le signal d'attaque en appliquant un signal de décalage au signal d'attaque pour augmenter ou diminuer le signal d'attaque de façon à empêcher que la vitesse linéaire diminue lorsque la vitesse linéaire détectée par l'unité de détection de vitesse linéaire (112) approche la vitesse linéaire admissible.

14. Appareil à disque optique selon la revendication 13,
dans lequel l'unité de commande de rotation (116) amène l'unité de rotation (114) à augmenter la vitesse de rotation du disque optique (1) lorsque l'unité de déplacement (111) déplace le point d'un rayon extérieur à un rayon intérieur du disque optique (1), et
l'unité de commande de temps de déplacement (117) applique un signal de décalage qui rend possible de diminuer la vitesse de déplacement du point par l'unité de déplacement (111) lorsque la vitesse linéaire détectée par l'unité de détection de vitesse linéaire (112) approche la vitesse linéaire admissible pendant le déplacement.

15. Appareil à disque optique selon la revendication 13,
dans lequel l'unité de commande de rotation (116) amène l'unité de rotation (114) à diminuer la vitesse de rotation du disque optique (1) lorsque l'unité de déplacement (111) déplace le point d'un rayon intérieur à un rayon extérieur du disque optique (1), et
l'unité de commande de temps de déplacement (117) applique un signal de décalage qui rend possible d'augmenter la vitesse de déplacement du point par l'unité de déplacement (111) lorsque la vitesse linéaire détectée par l'unité de détection de vitesse linéaire (112) approche la vitesse linéaire admissible pendant le déplacement.

16. Appareil à disque optique selon la revendication 1,
dans lequel l'unité de commande de temps de déplacement (117) ajuste une vitesse de rotation du disque optique (1) par l'unité de rotation (114).

17. Appareil à disque optique selon la revendication 16,
dans lequel l'unité de rotation (114) obtient un signal d'attaque délivré en sortie par l'unité de commande de rotation (116) et change la vitesse de rotation du disque optique (1) conformément au signal d'attaque, et
l'unité de commande de temps de déplacement (117, 123, 124) amplifie le signal d'attaque de façon à empêcher que la vitesse linéaire diminue lorsque la vitesse linéaire détectée par l'unité de détection de vitesse linéaire (112) approche la vitesse linéaire admissible.

18. Appareil à disque optique selon la revendication 16,
dans lequel l'unité de rotation (114) obtient un signal d'attaque délivré en sortie par l'unité de commande de rotation (116) et change la vitesse de rotation du disque optique (1) conformément au signal d'attaque, et
l'unité de commande de temps de déplacement (117, 123, 124) applique un signal de décalage au signal d'attaque et change le signal d'attaque de façon à empêcher que la vitesse linéaire diminue lorsque la vitesse linéaire détectée par l'unité de détection de vitesse linéaire (112) approche la vitesse linéaire admissible.

19. Appareil à disque optique selon la revendication 16,
dans lequel l'unité de commande de temps de déplacement (117) amène l'unité de rotation (114) à transiter la vitesse de rotation du disque optique (1) de façon à rendre la vitesse de rotation du disque optique (1) plus rapide que la vitesse de rotation correspondant à un emplacement de rayon cible au moment où le point atteint l'emplacement de rayon cible du point lorsque l'unité de déplacement (111) déplace le point vers l'emplacement de rayon cible selon le sens du rayon du disque optique (1).

20. Procédé d'irradiation destiné à irradier un faisceau optique (2) sur un disque optique (1), le faisceau optique (2) étant destiné à extraire des informations enregistrées sur un disque optique (1), comprenant :
une étape de rotation pendant laquelle un moteur (114) fait tourner le disque optique (1) ;
une étape de déplacement pendant laquelle une traverse (111) déplace un point sur le disque optique (1) irradié avec le faisceau optique (2) par rapport à un sens du rayon du disque optique (1) ;
une étape de détection de vitesse linéaire consistant à détecter une vitesse linéaire du point ;
une étape de commande de rotation consistant à commander le moteur (114) de sorte que la vitesse linéaire détectée pendant l'étape de détection de vitesse linéaire reste sensiblement constante dans un emplacement de rayon arbitraire sur le disque optique (1) lorsque les informations enregistrées sur le disque optique (1) sont extraites ; et
une étape de commande de temps de déplacement consistant à commander au moins l'un parmi le moteur (114) et la traverse (111) de façon à empêcher que la vitesse linéaire détectée pendant l'étape de détection de vitesse linéaire diminue à une vitesse linéaire admissible ou au-dessous lorsque le point est déplacé par la traverse (111) ;
le procédé étant **caractérisé en ce qu'**il comprend de plus
une étape de détermination de type consistant à déterminer le type de disque optique (1) devant être une cible d'irradiation du faisceau optique (2),
dans lequel, pendant l'étape de commande de temps de déplacement, la vitesse linéaire admissible est changée selon le type de disque optique (1) qui est jugé pendant l'étape de détermination de type.

21. Procédé d'irradiation pour le faisceau optique (2) selon la revendication 20,
dans lequel, pendant l'étape de commande de temps de déplacement, un profil d'emplacement montrant une relation entre un emplacement de rayon et un temps de déplacement correspondant au déplacement est effectué, la traverse (111) est commandée de sorte que le point se déplace selon le profil d'emplacement, et
le profil d'emplacement est corrigé de façon à empêcher que la vitesse linéaire diminue lorsque la vitesse linéaire détectée pendant l'étape de détection de vitesse linéaire approche la vitesse linéaire admissible, et la traverse (111) est commandée de sorte que le point est déplacé selon le profil d'emplacement corrigé.

22. Procédé d'irradiation pour le faisceau optique (2) selon la revendication 20,
dans lequel, pendant l'étape de commande de temps de déplacement,
la vitesse de rotation du disque optique (1) par le moteur (114) est ajustée.

23. Programme destiné à amener un ordinateur à exécuter un procédé d'irradiation destiné à irradier un faisceau optique (2) sur un disque optique (1), le faisceau optique (2) étant destiné à extraire des informations enregistrées sur le disque optique (1), comprenant:
une étape de rotation pendant laquelle un moteur (114) fait tourner le disque optique (1)
une étape de déplacement pendant laquelle une traverse (111) déplace un point sur le disque optique (1) irradié par le faisceau optique (2) dans un sens du rayon du disque optique (1) ;
une étape de détection de vitesse linéaire (112) consistant à détecter une vitesse linéaire du point ;
une étape de commande de rotation consistant à commander un moteur (114) de sorte que la vitesse linéaire détectée pendant l'étape de détection de vitesse linéaire reste sensiblement constante sur un emplacement de rayon arbitraire sur le disque optique (1), lorsque les informations enregistrées sur le disque optique (1) sont extraites ;
une étape de commande de temps de déplacement consistant à commander au moins l'un parmi le moteur (114) et la traverse (111) de façon à empêcher que la vitesse linéaire détectée pendant l'étape de détection de vitesse linéaire diminue à une vitesse linéaire admissible ou au-dessous, lorsque le point est déplacé par la traverse (111) ;
**caractérisé en ce que** le procédé d'irradiation comprend de plus
une étape de détermination de type consistant à déterminer un type de disque optique (1) devant être une cible d'irradiation du faisceau optique (2),
dans lequel, pendant l'étape de commande de temps de déplacement, la vitesse linéaire admissible est changée selon le type de disque optique (1) déterminé pendant l'étape de détermination de type.

24. Programme selon la revendication 23,
dans lequel, pendant l'étape de commande de temps de déplacement, un profil d'emplacement montrant une relation entre un emplacement de rayon et un temps de déplacement correspondant au déplacement, et la traverse (111) est commandée de sorte que le point se déplace selon le profil d'emplacement, et
le profil d'emplacement est corrigé de façon à empêcher que la vitesse linéaire diminue, et la traverse (111) est commandée de sorte que le point se déplace selon le profil d'emplacement corrigé lorsque la vitesse linéaire détectée pendant l'étape de détection de vitesse linéaire approche la vitesse linéaire admissible.

25. Programme selon la revendication 23,
dans lequel, pendant l'étape de commande de temps de déplacement,
une vitesse de rotation du disque optique (1) par le moteur (114) est ajustée.
